(19) Europäisches Patentamt
European Patent Office
Office européen des brevets

(11) **EP 3 377 585 B1**

(12) **EUROPÄISCHE PATENTSCHRIFT**

(45) Veröffentlichungstag und Bekanntmachung des Hinweises auf die Patenterteilung:
**26.04.2023 Patentblatt 2023/17**

(21) Anmeldenummer: **16809654.3**

(22) Anmeldetag: **18.11.2016**

(51) Internationale Patentklassifikation (IPC):
**C09C 1/48** *(2006.01)* **C09C 1/56** *(2006.01)*
**C09K 23/00** *(2022.01)*

(52) Gemeinsame Patentklassifikation (CPC):
**C09C 1/56; C09C 1/48; C09K 23/002;**
C01P 2006/12; C01P 2006/19; Y02E 50/10

(86) Internationale Anmeldenummer:
**PCT/EP2016/078176**

(87) Internationale Veröffentlichungsnummer:
**WO 2017/085278 (26.05.2017 Gazette 2017/21)**

(54) **PARTIKELFÖRMIGES KOHLENSTOFFMATERIAL AUS NACHWACHSENDEN ROHSTOFFEN**

PARTICULATE CARBON MATERIAL FROM RENEWABLE RAW MATERIALS

MATÉRIAU PARTICULAIRE À BASE DE CARBONE À PARTIR DE RESSOURCES RENOUVELABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2015 DE 102015014956**
**29.11.2015 DE 102015015549**
**29.11.2015 DE 102015015550**
**05.02.2016 DE 102016201801**

(43) Veröffentlichungstag der Anmeldung:
**26.09.2018 Patentblatt 2018/39**

(60) Teilanmeldung:
**20160400.6 / 3 682 965**
**22150185.1 / 4 006 112**

(73) Patentinhaber: **SunCoal Industries GmbH**
**14974 Ludwigsfelde (DE)**

(72) Erfinder:
• **WITTMANN, Tobias**
**10965 Berlin (DE)**
• **BERGEMANN, Klaus**
**15712 Königs Wusterhausen (DE)**

(74) Vertreter: **Steffan & Kiehne Patentanwälte PartG mbB**
**Burgplatz 21-22**
**40213 Düsseldorf (DE)**

(56) Entgegenhaltungen:
EP-A2- 2 671 632       WO-A1-2010/043562
WO-A1-2015/018944       US-A1- 2005 100 502

**Beschreibung**

Die vorliegende Erfindung betrifft ein partikelförmiges Kohlenstoffmaterial nach Anspruch 1.

Es gibt vielfältige Anwendungen für partikelförmiges Kohlenstoffmaterial. Eine Anwendung ist die Nutzung als Füllstoff für Polymere wie Elastomere, Thermo- oder Duroplasten. Bei der Herstellung von Kautschuk-Artikeln aus Elastomeren werden Füllstoffe eingesetzt, um die gummitechnischen Eigenschaften der vernetzten Kautschuk-Artikel z.B. gemessen als Zugfestigkeit, Härte, Steifigkeit oder Reißfestigkeit zu beeinflussen. Im Weiteren werden dadurch die Produkteigenschaften wie beispielsweise bei Fahrzeugreifen Rollwiderstand, Abrieb und Nassrutschverhalten eingestellt. Die Beeinflussung gummitechnischer Eigenschaften durch einen Füllstoff wird auch als Verstärkung bezeichnet.

Die derzeit am weitesten verbreiteten Füllstoffe sind Ruß und Kieselsäure. Ruß wird meist durch Pyrolyse von Erdgas, Erdölteilen und/oder kohlebasierten Ölen hergestellt, wobei abhängig von der Rußqualität bei der Herstellung erhebliche Mengen Kohlendioxid erzeugt werden. Fällungskieselsäure wird aus Wasserglas hergestellt, wobei bei der Wasserglasherstellung ebenfalls große Mengen Kohlendioxid anfallen.

Im Zuge der Verknappung fossiler Kohlenstoffressourcen (vergleiche erdöl- und kohlestämmige Öle als Rußrohstoff), der Einsparung von Chemikalien (siehe Schwefelsäure bei der Kieselsäurefällung), aber vor allem im Zuge der Vermeidung von Kohlendioxidemissionen aus fossilen Quellen (siehe Karbonatzersetzung bei der Wasserglasherstellung; siehe Verbrennung von Öl oder Gas in der Vorbrennkammer von Rußreaktoren sowie teilweise Verbrennung des Rußrohstoffes bei der Rußbildung) besteht zunehmend Bedarf, Industrieprodukte auf der Basis nachwachsender Rohstoffe herzustellen. Bei nachwachsenden Rohstoffen stammt aller Kohlenstoff aus atmosphärischem Kohlendioxid. Bei energetischer Verwertung von nachwachsenden Rohstoffen ist damit die Kohlendioxidbilanz weitestgehend neutral. Bei stofflicher Verwertung nachwachsender Rohstoffe wird bei der Herstellung kein fossiler Kohlenstoff freigesetzt und sogar atmosphärischer Kohlenstoff im kohlenstoffhaltigen Material - zumindest für die Dauer der Nutzung der jeweiligen Produkte - gebunden.

Im nachfolgenden wird ein beispielsweise als Füllstoff einsetzbares partikelförmiges Kohlenstoffmaterial auf Basis nachwachsender Rohstoffe beschrieben, dass überraschend gute Eigenschaften beim Einsatz als Füllstoff in Elastomeren im Vergleich zu den klassisch hergestellten Füllstoffen Ruß und Kieselsäure aufweist.

Nachfolgend wird die Bedeutung von vorliegend verwendeten Begriffen beschrieben:
Ein Füllstoff ist ein partikelförmiger Feststoff, der einem Elastomer, Thermoplasten oder Duroplasten zugesetzt wird. Je nach Eigenschaft des Füllstoffes werden z.B. beim Zusatz zu Elastomeren die gummitechnischen Eigenschaften einer (zum Beispiel durch Vulkanisation) vernetzten Kautschukmischung durch die Zugabe des Füllstoffes in der Regel zusammen mit weiteren Additiven vor der Vernetzung unterschiedlich stark beeinflusst.

Ein typischer Füllstoff ist Kieselsäure. Mit Kieselsäure ist im Wesentlichen Fällungskieselsäure gemeint, welche hauptsächlich in Kautschukartikeln Verwendung findet. Daneben gibt es auch die pyrogene Kieselsäure.

Ein anderer typischer Füllstoff ist Ruß. Hierbei ist immer Industrieruß gemeint, also ein technisch gezielt hergestellter Ruß mit definierten Eigenschaften. Ruß wird überwiegend über unvollständige Verbrennung oder Pyrolyse hergestellt. Mit Ruß sind hier keine Nebenprodukte einer Verbrennung wie im Falle von Diesel-Ruß oder Schornsteinruß gemeint. Ein Beispiel für die Herstellung von Ruß (Carbon Black) ist z.B. in der US 2005/100502 A1 beschrieben.

Die verstärkende Wirkung von Ruß und/oder Kieselsäure korreliert stark mit der Primärteilchengröße des Füllstoffes. Die Primärteilchengröße steht im direkten Zusammenhang zur spezifischen Oberfläche.

Vor diesem Hintergrund werden niederoberflächige Ruße als inaktive Ruße, Ruße mit mittlerer Oberfläche als Halbaktiv-Ruße, und hochoberflächige Ruße als Aktiv-Ruße bezeichnet, wobei mit Aktivität hier der Grad der Verstärkungswirkung der jeweiligen Ruße im Kautschuk gemeint ist. Vergleiche dazu auch ASTM D 1765. Typischer Weise haben inaktive Ruße BET-Oberflächen $< 30\ m^2/g$, Halbaktivruße $30 - 70\ m^2/g$ und Aktiv-Ruße $90$ bis $> 150\ m^2/g$. Die Wichtigkeit der Oberfläche als Leitgröße wird auch daran deutlich, dass die erste Ziffer der ASTM-Ruße die Teilchengröße respektive die Oberfläche widerspiegelt. Bei Kieselsäure ist die Differenzierung weniger stark ausgeprägt. Kieselsäure mit deutlicher Verstärkerwirkung haben typischer Weise BET-Oberflächen $> 100\ m^2/g$. Mit Füllstoff ist im Folgenden ein Produkt gemeint, dass mindestens die Leistung eines Inaktiv-Rußes erreicht. Eine Leistung die mindestens vergleichbar mit der eines Inaktiv-Rußes ist, wird im Folgenden auch als verstärkende Wirkung bezeichnet. Ein typischer Inaktiv-Ruß ist N990.

Die Partikeloberfläche setzt sich aus der äußeren und der inneren Oberfläche zusammen. Zugehörige Meßgröße ist die spezifische Oberfläche des partikelförmigen Materials. Die spezifische Oberfläche kann als äußere Oberfläche mittels *statistical thickness surface area,* kurz STSA oder als Gesamtoberfläche aus äußerer und innerer Oberfläche mittels Sickstoff-Oberfläche nach Brunauer, Emmett und Teller, kurz BET gemessen werden. Der Unterschied zwischen innerer und äußerer Oberfläche resultiert im Wesentlichen aus der Porosität des Materials. Die innere Oberfläche erfasst neben der die Teilchen umhüllenden Fläche zusätzlich auch die Fläche, die in Poren vorliegt. So kann ein grobteiliges Material, welches eine vergleichsweise geringe äußere (also STSA-) Oberfläche hat, trotzdem hohe Gesamt-(also BET-) Oberfläche (bestehend aus äußerer und innerer Oberfläche) aufweisen, wenn es stark porös ist.

Zur Beschreibung der Feinteiligkeit eines Materials über Werte der spezifischen Oberfläche ist also genau genommen nur die STSA-Oberfläche heranzuziehen. Umgekehrt ist die Differenz "BET-Oberfläche minus STSA-Oberfläche" ein Maß für die Porosität feinteiliger Materialien, da sie die Oberfläche der Poren darstellt. Je kleiner die Differenz desto weniger porös ist das Material. Bei nicht-porösen Materialien beschreibt auch die BET gut die Feinteiligkeit.

Die Bestimmung der BET-Oberfläche und der STSA-Oberfläche erfolgt entsprechend der Norm ASTM D 6556-14. In der vorliegenden Erfindung erfolgt abweichend von dieser die Probenvorbereitung/Ausgasung für die STSA- und BET-Messung bei 150°C.

Gleichfalls sind die Methoden und ihre Bedeutung beschrieben in "Kautschuktechnologie" (Fritz Röthemeier, Franz Sommer, 3. Auflage, Carl Hanser Verlag München 2013) auf Seite 289 am Beispiel eines klassischen Rußes. Die wichtigste Methode zur Bestimmung der spezifischen Oberfläche ist die Messung der Stickstoffadsorption nach Brunauer, Emmett und Teller (BET-Methode). Dabei wird zuerst eine Probe des Rußes im Vakuum erhitzt, um die an der Oberfläche adsorbierten Stoffe zu entfernen. Nach dem Abkühlen wird die Probe mit Stickstoff bei Siedetemperatur (77 K) beaufschlagt und das adsorbierte Volumen sowie der zugehörige Gleichgewichtsdampfdruck ermittelt. Bei niedrigen Drucken bildet sich zuerst eine monomolekulare Schicht, an die mit steigendem Druck weitere Schichten angelagert werden. Die spezifische Oberfläche lässt sich durch Auswertung der Adsorptionsisotherme nach der BET-Methode mit einem Partialdruck des Stickstoffs von 0,1 bis 0,3 bestimmen. Für Routinebestimmungen sind Einpunktmessungen ausreichend.

Die Oberflächenbestimmung mittels $N_2$-Adsorption ergibt für mikroporöse Ruße eine größere Oberfläche, da die Stickstoffmoleküle auch in die Poren eindringen können. Dieser Effekt lässt sich durch Verwendung oberflächenaktiver Stoffe, die größer als die Poren sind (CTAB-Methode) oder durch die Bestimmung der N2-Adsorption bei höheren Partialdrücken (0.2 bis 0.5) und einer weiterführenden Auswertung (STSA-Methode) vermeiden.

STSA-Methode (Statistical Thickness Surface Area): Die Auswertung greift auf dieselben Messdaten wie bei der BET-Methode zurück, die Messung erfolgt jedoch bei höheren Partialdrücken (0.2 bis 0.5). Die STSA Methode basiert auf der sogenannten t-Plot-Auswertemethode nach de Boer, später modifiziert von Magee. Hier geht man davon aus, dass die Adsorption lokal unterschiedlich in verschiedenen Stapelhöhen erfolgt und dann eine statistische Dicke aufweisen. Die STSA-Oberfläche wird ebenfalls in $m^2$/g angegeben und ist ein Maß für die "äußere" Oberfläche eines Rußpartikels, vor allem ist sie jedoch ein Maß für die kautschukwirksame Oberfläche.

Beim Vergleich der Leistung von Ruß oder Kieselsäure in vernetzten Kautschuk-Artikeln ist es angesichts der bekannten Abhängigkeit zwischen spezifischer Oberfläche und Leistung sinnvoll, Füllstoffe mit ähnlicher spezifischer Oberfläche zu vergleichen. Mit ähnlicher Oberfläche ist hier und im Folgenden gemeint, dass die BET-Werte unporöser Materialien oder die STSA-Werte nicht weiter als ungefähr 10 - 20 $m^2$/g auseinander liegen.

Ruß und Kieselsäure sind aus Primärteilchen aufgebaut. Diese nicht isoliert existierenden, aber in bildlichen Darstellungen erkennbaren geometrischen Einheiten sind zu Aggregaten verwachsen, wobei die Verwachsung durch starke chemische Bindungen erfolgt. Aggregate können darüber hinaus zu Agglomeraten zusammengelagert sein, wobei die Verbindung von mehreren Aggregaten zu Agglomeraten über schwache Kräfte erfolgt. Agglomerate können durch Dispergierung zerstört werden. Der Grad der Aggregatbildung wird veraltet durch DBP-Absorption oder neuerdings durch Öl-Absorption beschrieben. Näheres findet sich in der ASTM D 2414. Man spricht auch von der Öl-Absorptionszahl mit der Abkürzung OAN für englisch *oil absorption number*. Ein hoher Wert der DBP- oder Öl-Absorption kennzeichnet ein Material mit stark verzweigten Aggregaten. Vor allem bei Ruß hat die sogenannte Struktur einen direkten Einfluss auf seine verstärkende Wirkung.

Die Leistung von Ruß oder Kieselsäure in Kautschukanwendungen wird in der Regel über die Messung gummitechnischer Kenngrößen ermittelt. Gummitechnische Kenngrößen beschreiben bestimmte Eigenschaften einer Kautschukmischung im vernetzten, zum Beispiel vulkanisierten Zustand. Insofern sind in dieser Schrift unter Kautschuk-Artikeln die fertigen Artikel aus Kautschuk nach deren Vernetzung respektive Vulkanisierung zu verstehen. Diese fertigen Kautschukartikel werden in der vorliegenden Schrift auch als Gummiteile, Formkörper, Artikel aus Elastomerwerkstoff oder Kautschukprodukt bezeichnet. Aus der breiten Vielfalt von Gummiteilen in verschiedensten Anwendungsgebieten, ergibt sich eine Vielzahl unterschiedlicher Größen zur Beschreibung von Gummiteilen. Je nach Anwendungsgebiet können als positiv genannte Werte einer Größe an anderer Stelle auch als negativ bewertet werden. Als gummitechnische Kenngrößen werden vorrangig Zugfestigkeit (ASTM D 412, DIN 53504), Reißfestigkeit (DIN 53455) sowie die Spannungswerte bei 50%, 100%, 200% und 300% Dehnung (DIN 53504), im Folgenden als sogenannten Modulus 50%, Modulus 100%, Modulus 200% beziehungsweise Modulus 300% bezeichnet, herangezogen. Des Weiteren kann zum Beispiel die Härte (ASTM D 2240) eine Rolle spielen. Für diese Größen werden hohe aber nicht zu hohe Werte als positiv angesehen.

Ein weiterer gummitechnischer Kennwert wird der Verlustfaktor tan delta als Quotient aus Verlustmodul E" und Speichermodul E' des Elastomerwerkstoffs genutzt. Man unterscheidet den Wert des tan delta im hohen Temperaturbereich, insbesondere den tan delta bei 60°C und den tan delta im unteren Temperaturbereich, insbesondere den tan delta bei 0°C. Während der tan delta bei 60°C auf die Rollreibung eines Reifen schließen lässt, wird der tan delta bei 0°C für die Beurteilung des Nassgriffs eines Reifen genutzt. Für den tan delta bei 60°C werden in diesem Zusammenhang niedrige Werte bevorzugt, für den tan delta bei 0°C hohe Werte. Die tan delta Werte werden im Zuge einer dynamisch mechanischen Analyse *(temperature sweep)* bestimmt. Die dynamisch mechanische Analyse (DMA) wird im hier beschriebene Fall mit prismenförmigen Formstücken der Abmessungen 2x10x35 mm für die Temperaturvariation an einem Eplexor 150N Dynamic Mechanical Thermal Spectrometer durchgeführt.

Unbehandelte Kieselsäure ist ein Füllstoff mit polaren funktionellen Gruppen, der in schwefel-vernetzten Systemen die Vernetzung stören kann. Die Störung der Schwefelvernetzung kann zum Beispiel auf der Adsorption von Vulkanisationshilfsmitteln an den polaren funktionellen Gruppen der Füllstoffoberfläche beruhen. Außerdem können zum Beispiel die unterschiedlichen Oberflächenenergien von Polymer und Füllstoff eine gute Dispersion des Füllstoffs im Polymer verhindert und bei einer Wiedererwärmung der Mischung (z.B. bei der Vulkanisation) zu einer unerwünschten Re-Agglomerierung der bereits dispergierten Füllstoffpartikel führen (sogenannte Füllstoffflokkulation). Dies ist Ausgangspunkt für die Zugabe von Reagenzien zur Kieselsäure. Im einfachsten Fall werden die polaren Gruppen der Kieselsäure mit geeignet basischen Verbindungen umgesetzt, wodurch diese Gruppen deaktiviert oder maskiert werden. Die Kieselsäure als solche insgesamt wird auf diese Weise in ihrer Funktion als Verstärkerfüllstoff aktiviert, d.h. die Oberflächenchemie der Kieselsäure wird durch diese Aktivierung bzw. Maskierung an die Oberflächenchemie des Polymers angepasst. Vergleiche dazu: Fritz Röthemeier, Franz Sommer, 3. Auflage, Carl Hanser Verlag München 2013 auf Seite 301 - 302.

Zur Verbesserung der gummitechnischen Eigenschaften wird Kieselsäure in der Regel mit Kopplungsreagenzien verwendet. Kopplungsreagenzien sind bifunktionelle Verbindungen, die einerseits an der Kieselsäure und andererseits am Kautschuk anbinden und so eine Verbindung zwischen der Kieselsäure und dem Kautschuk erzeugen können. Dies ist besonders wichtig, da Kieselsäure und Kautschuk an sich chemisch zueinander unverträglich sind. Ein typisches Kopplungsreagenz ist Bis(triethoxypropylsilyl)tetrasulfid beim Einsatz von Kieselsäure in Kautschuk.

In der Kunststoffanwendung werden Haftvermittler eingesetzt, die ebenfalls für eine Verbindung zwischen Polymer und einer weiteren Komponente, die ein anderes Polymer oder ein Füllstoff sein kann, sorgen. In der vorliegenden Schrift wird unter Kopplungsreagenz auch ein Haftvermittler verstanden.

Im Bereich der Pulvercharakterisierung wird oft auch die Korngröße oder die Korngrößenverteilung angegeben. Diese wird überwiegend durch Laser-Beugung oder Siebanalyse ermittelt. Es wird in der Regel entweder angegeben, welchen prozentualen Anteil die Anzahl (Q0 Verteilung) oder das Volumen (Q3 Verteilung) von Teilchen einer bestimmten geometrischen Ausdehnung an der Gesamtmenge der Teilchen hat. Die Angabe erfolgt üblicher Weise in $\mu$m. Die Korngröße erfasst dabei die Größe des unter den konkreten Bedingungen separiert vorliegenden Teilchens. Sie ist vom Dispergiermedium und der Dispersionsgüte abhängig. Die Korngröße unterscheidet nicht zwischen Teilchen als Resultat makroskopischer Verbackung beispielsweise durch Fremdstoffe, Teilchen als Resultat mikroskopischer Agglomeration bei unzureichendem Dispergieraufwand oder Teilchen in Form von isolierten Aggregaten oder Primärpartikel. Sie gibt die Ausdehnung eines nach außen begrenzten Körpers an, auch wenn dieser eventuell aus mehreren verbundenen Teilen besteht. Mittels der Materialdichte (Rohdichte) kann aus der Volumenverteilung die Massenverteilung errechnet werden.

Die Morphologie von Füllstoffen kann faserförmig, plättchenförmig oder sphärisch sein. Als Unterscheidungskriterium kann das Länge-zu-Durchmesser-Verhältnis herangezogen werden. Die Ausdehnungen in verschiedene Raumrichtungen werden dazu beispielsweise mittels elektronenmikroskopischer Messungen (TEM, REM) ermittelt. Oft wird auch vom Aspekt-Verhältnis, dem Quotienten aus größter und kleinster Ausdehnung gesprochen. Es kann sowohl in der Form x:y als auch in Form des ausgerechneten Quotienten angegeben werden. Eine Kugel hätte damit als ausgerechneter Quotient ein Aspektverhältnis von 1, ellipsoide Gebilde von ungefähr 1,5 bis 2 und faserähnliche Gebilde über 10.

Konventioneller Ruß, der aus Rohstoffen fossiler Herkunft, also auf Basis von Kohleteer, Erdgas oder Erdöl, hergestellt wird, wird im Folgenden als klassischer Ruß bezeichnet. Im Gegensatz dazu wird von biogenem Ruß gesprochen, wenn der Ruß aus nachwachsenden Rohstoffen hergestellt wurde.

Rohstoffe fossiler Herkunft sind vor allem alle vom Erdöl abgeleiteten Stoffe, wie Destillate, Destillationsrückstände oder durch Crack-Verfahren bearbeitete Erdölbestandteile. Ebenfalls fallen unter die fossilen Rohstoffe alle Produkte die bei der Destillation, Verkokung oder Verflüssigung von Braunkohle, Steinkohle oder Anthrazit anfallen. Auch Erdgas ist ein fossiler Rohstoff. Allen fossilen Kohlenstoffquellen ist gemeinsam, dass ihr $^{14}$C-Gehalt unter dem von nachwachsenden Rohstoffen liegt, da sie nicht mehr am steten Isotopenaustausch teilnehmen.

Nachwachsende Rohstoffe sind dagegen alle Produkte, die sich von der direkten Nutzung von Pflanzen oder Tieren herleiten. Denkt man an den Ruß-Herstellungsprozess können dies vorrangig Pflanzenöle oder tierische Fette sein. Im erweiterten Sinne und damit im Sinne dieser Schrift zählt jegliche Biomasse dazu.

Biomasse sind alle organischen Stoffe, die aus der Nutzung von Pflanzen oder Tieren zugänglich sind oder als Abfälle dieser Nutzung anfallen; einschließlich daraus hergestellter oder abgetrennter Folgeprodukte und Abfälle. Ohne hier eine Beschränkung vorzunehmen können als typische Biomasse-Formen Holz, Stroh, Zucker, Stärke, Pflanzenöl, Blätter, Schalen, Bagasse, leere Fruchtstände, Gärreste, Grünschnitt oder organischer Siedlungsabfall genannt werden. Es ist üblich, organisches Material, dass eine kürzere Regenerationszeit als Torf hat, als Biomasse zu bezeichnen. Speziell zählen dazu auch Abfälle aus der industriellen Nutzung von Pflanzen. Beispielsweise werden große Mengen Holz in der Zellstoffindustrie verarbeitet, bei denen lignin-haltige Abfälle, wie Schwarzlauge anfallen. Allen Biomassen ist gemeinsam, dass ihr $^{14}$C-Gehalt über dem von fossilen Rohstoffen liegt, da sie am steten Isotopenaustausch teilnehmen.

Eine Biomasseart ist Lignin, welches in einigen Holzverarbeitungsprozessen anfällt. Lignin ist ein natürlichvorkommendes Polymer, welches sich vorrangig von den Grundbausteinen Cumaryl-, Coniferyl- und Sinapyl-Alkohol ableiten lässt. Je nach Prozess der Holzverarbeitung fällt es in großen Mengen als KRAFT-Lignin, in der Regel gelöst in Schwarzlauge, HydrolyseLignin oder Lignin-Sulfonat an. Je nach pH-Wert im jeweiligen Verarbeitungsprozess können in den für Lignin typischen Hydroxyl-Gruppen die Wasserstoffatome anteilig durch Metallkationen ersetzt sein. Das Ligninsulfonat ist genau genommen bereits ein chemisches Derivat des Lignins, da es über zusätzliche, während der Verarbeitung eingefügte SulfonatGruppen verfügt.

HTC ist die Abkürzung für hydrothermale Karbonisierung. Dabei handelt es sich um die Behandlung eines Stoffes in wässriger Phase unter Druckabschluss und bei erhöhter Temperatur. Durch den erhöhten Druck ist es möglich Reaktionen in flüssigem Wasser durchzuführen, bei denen die Temperatur weit oberhalb von 100°C, also oberhalb des Siedepunktes von Wasser bei Normaldruck, liegt.

Füllstoffe mit verstärkender Wirkung werden nach dem Stand der Technik überwiegend zur Verbesserung der gummitechnischen Eigenschaften von Kautschuk-Artikeln eingesetzt. Die beiden am weitesten verbreiteten Füllstoffe für Kautschukanwendungen sind Ruß und Kieselsäure. Ruß wird fast ausschließlich aus fossilen Rohstoffen gewonnen. Da es sich bei dem erfindungsgemäßen Produkt um ein z.B. als Füllstoff einsetzbares partikelförmiges Kohlenstoffmaterial, das aus nachwachsenden Rohstoffen gewonnen wird, handelt, gehören die klassischen, aus fossilen Rohstoffen gewonnenen, Ruße nicht zum Stand der Technik. Bei Kieselsäure handelt es sich um einen Füllstoff, der aus anorganischen Siliziumverbindungen gewonnen wird. Deshalb zählen Kieselsäuren ebenfalls nicht zum Stand der Technik.

Gegenstand von Forschungsaktivitäten ist die Entwicklung alternativer Füllstoffe aus nachwachsenden Rohstoffen. Der überwiegende Anteil dieser Entwicklungsanstrengungen verfolgt als maßgebliches Ziel, die Eigenschaften von Ruß durch die Veredelung von nachwachsenden Rohstoffen so gut wie möglich nachzubilden. Dies betrifft insbesondere den Kohlenstoffanteil der in der Regel auf mehr als 90% eingestellt wird, aber auch den Anteil an graphitischem Kohlenstoff. Die so erzeugten Materialien werden deshalb auch biobasierter Ruß bzw. *bio-based* Carbon Black genannt. Meist ist das parallele Ziel, einen Füllstoff aus nachwachsenden Rohstoffen bereitzustellen, der klassische Ruße zumindest teilweise substituieren kann. Weiterhin gibt es Entwicklungsanstrengungen, die darauf abzielen, die nachwachsenden Rohstoffe ggf. nach einer Reinigung, Fraktionierung oder Zerkleinerung direkt als Füllstoff einzusetzen.

Aus WO 2010/043562 A1 ist zum Beispiel bekannt, dass Ruß auch aus nachwachsenden Rohstoffen hergestellt werden kann. Der offenbarte Ruß soll als Füllstoff bei speziell engerer Aggregatgrößenverteilung vor allem einen verbesserten Modul in Kautschukanwendungen aufweisen. Die in WO 2010/043562 A1 charakterisierten Ruße liegen hinsichtlich ihrer grundlegenden Eigenschaften im Bereich der klassischen Ruße N220 und N375. Der hier beschriebene Ruß wird im klassischen Furnace-Prozess hergestellt, wobei in einer Vorbrennkammer Erdgas eingesetzt wird und es zur Freisetzung von fossilem Kohlenstoff kommt. Der so gewonnene Ruß weist einen S-Gehalt von max. 2,5 %, einen Gehalt an flüchtigen Bestandteilen nach DIN 53552 von max. 2,5 % auf und damit überschlägig einen C-Gehalt von mehr als 95 % Kohlenstoff.

In WO 2014/096544 A1 wird ein Kohlenstoffprodukt beansprucht, welches aus porösen Kohlenstoffpartikeln mit einer Oberfläche von mehr als 500 $m^2$/g und einem durchschnittlichen Porenvolumen von weniger als 1 ml/g gebildet wird, die wiederum aus Primärpartikeln, wie zum Beispiel Aggregaten, bestehen, die eine Partikelgröße von kleiner 250 nm haben. Das Kohlenstoffprodukt wird aus hydrothermaler Karbonisierung von Bio-Material erhalten, das mehr als 40 % Kohlenstoff bezogen auf die Trockenmasse hat. Als Ausgangsstoffe werden Lignin, Tannin und Betulin, Hydrolyselignin, Produkte aus der Herstellung von Papier, Platten, Bio-Treibstoff oder Brauprodukten genannt. Der Kohlenstoffgehalt der in den Beispielen beschriebenen Produkte liegt dabei zwischen 77,31 und 86,44 % Kohlenstoff. Die in den Beispielen angegebene starke Inkohlung des Materials bedeutet, dass andere Elemente wie vor allem Sauerstoff und Wasserstoff abgereichert werden müssen. Dies führt zwangsweise zu dem Nachteil, dass die Oberflächenchemie des Materials verarmt, das heißt es liegen weniger funktionelle Gruppen auf der Oberfläche vor. Die geringeren Oberflächengruppen wirken sich nachteilig auf mögliche Anbindungsmechanismen zum Polymer aus.

Es ist auch bekannt, nachwachsende Rohstoffe wie Lignin oder Ligninderivate sowohl ohne als auch mit Kopplungsreagenzien in Kautschukmischungen direkt einzusetzen, um die gummitechnischen Eigenschaften im vernetzten Zustand zu beeinflussen.

So beschreibt DE 10 2008 050 966 A1 eine Kautschukmischung, die ein Ligninderivat enthält, spezieller ein Ligninsulfonsäurederivat, bis hin zu Alkali oder Erdalkalisalzen der Ligninsulfonsäure. Die unter Nutzung dieses Ligninsulfonsäurederivats hergestellte Kautschukmischung kann daneben auch Ruß oder Kieselerde enthalten. Die Anmeldung beansprucht auch einen Reifen aus der vorher genannten Kautschukmischung. Nachteilig ist, wie die in DE 10 2008 050 966 A1 offenbarten Beispiele zeigen, dass die Ligninderivate immer neben 40 phr Ruß oder 80 phr Kieselerde/5phr Ruß eingesetzt werden. Der Begriff Kieselerde wird in dieser Schrift für Kieselsäure verwendet. Es wird also nur eine Verbesserung der gummitechnischen Kenngrößen in Kombination mit den klassischen Füllstoffen erreicht.

Beim Einsatz von nachwachsenden Rohstoffen in Kautschukmischungen unter Zuhilfenahme von Kopplungsreagenzien wird insbesondere auf die Kenntnisse beim Einsatz von Kieselsäure zurückgegriffen.

Von Kieselsäure ist grundsätzlich bekannt, dass in schwefel-vernetzten Systemen Füllstoffe mit polaren funktionellen Gruppen, wie z.B. unbehandelte Kieselsäure, die Vernetzung stören. Gleichzeitig ist bekannt, dass diese Störung durch Zugabe geeigneter Reagenzien wie Amine oder Glykole abgemildert werden kann. Die funktionellen Gruppen werden blockiert bzw. maskiert. Vergleiche dazu: Fritz Röthemeier, Franz Sommer, 3. Auflage, Carl Hanser Verlag München 2013 auf Seite 301 - 302.

Bei der Verstärkung mit Kieselsäure ist bekannt, dass der Effekt der Kieselsäure durch Kopplungsreagenzien erheblich verbessert werden kann. Dabei werden funktionelle Alkoxysilane eingesetzt, die einerseits beim Mischen mit der Alkoxysilangruppe unter Ausbildung einer Si-O-Si Bindung an die Kieselsäure anbinden können und später mit einer weiteren Funktion bei der Vulkanisation ggf. unter Mitwirkung von zugesetztem Schwefel an das Kautschukpolymer anbinden. Als verstärkende helle Füllstoffe eignen sich Kieselsäure und Silikate. Durch Behandeln der Kieselsäure mit Silanen werden die mechanischen Eigenschaften und die Verarbeitungseigenschaften wesentlich verbessert (Siehe Fritz Röthemeier, Franz Sommer: Kautschuktechnologie, 3. Auflage, Carl Hanser Verlag München 2013, Seite 112-113, Kapitel 2.5.4.3 Füllstoffe).

Ähnlich sind Verwendungen von Silan als Kopplungsreagenz bei nachwachsenden Rohstoffen, die als Füllstoffe eingesetzt werden sollen, bekannt.

So beschreibt EP 2 223 928 A1 ein funktionalisiertes Lignin, wobei im Lignin enthaltene Gruppen mit Funktionalisierungsagenzien reagieren und diese Reagenzien Anhydride, Ester und Silane sein können. Des Weiteren wird eine Kautschukmischung offenbart, die als Füllstoff funktionalisiertes Lignin, ggf. in Mischung mit klassischem Ruß oder Kieselsäure und optional ein Kopplungsreagenz für das funktionalisierte Lignin oder für die Kieselsäure enthält.

Es ist ebenfalls bekannt, feinteilige Materialien (die als Füllstoffe einsetzbar wären) durch hydrothermale Karbonisierung (HTC) zu erzeugen.

Beispielhaft sei auf die WO 2014/122163 A1 hingewiesen, die eine Methode zur Herstellung von kohlenstoff-angereichertem Bio-Masse-Material, das erhaltene Biomassematerial und seine Verwendung beschreibt. Das Einsatzmaterial Lignozellulose-Material wird bei erhöhter Temperatur, vorzugsweise bei maximal 120 - 320 °C, und partiell oxidierenden Bedingungen, d.h. bei unterstöchiometrischer Anwesenheit von Sauerstoff vorzugsweise im Bereich 0,15 - 0,45 mol/kg trockenes Lignozellulosematerial, behandelt und nach Öffnen des Reaktors werden optional feste Produkte aus der Reaktionsmischung abgetrennt. Das Einsatzmaterial hat einen Feuchtegehalt zwischen 10 % und 70 % und eine Größe zwischen 0,2 und 100 mm. Der angewendete Druck liegt zwischen 1 und 100 bar absolut. Als Reaktionszeit werden 2-500 min angegeben. Es werden vorzugsweise 0,1 - 1 kg Wasser oder Dampf/ kg Lignozellulose eingesetzt. Die Kohlenstoffkonzentration wird um 8 - 25 % erhöht. Das erhaltene Material hat maximal 45-60 % Kohlenstoff, neben 5-8 % Wasserstoff und 35-50 % Sauerstoff. Als Verwendung wird lediglich die Verbrennung, speziell in gemahlenem Zustand zur Staubfeuerung angegeben.

Weiterhin ist ein Verfahren zur Gewinnung von karbonisiertem Lignin mit definierter Korngrößenverteilung aus einer Lignin beinhaltenden Flüssigkeit bekannt, wobei die Lignin beinhaltende Flüssigkeit einer hydrothermalen Karbonisierung unterzogen wird, wodurch das Lignin in ein karbonisiertes Lignin überführt wird, und das karbonisierte Lignin von der das karbonisierte Lignin beinhaltenden Flüssigkeit abgetrennt wird, die Lignin beinhaltende Flüssigkeit bei Temperaturen im Bereich von etwa 150°C bis etwa 280°C einer hydrothermalen Karbonisierung unterzogen wird und die Korngrößenverteilung des karbonisierten Lignins durch Anpassung der $H^+$-Ionenkonzentration in der Lignin beinhaltenden Flüssigkeit vor und/oder während der hydrothermalen Karbonisierung eingestellt wird. Somit ist bekannt, dass durch die Einstellung der $H^+$-Ionenkonzentration einer Lignin beinhaltenden Flüssigkeit Einfluss auf die Verteilung der Korngröße des erhaltenden Produktes, d.h. auf die Größe der Agglomerate genommen werden kann.

Aus WO 2015/018944 A1 ist zudem ein Verfahren zur Gewinnung von ungelöstem karbonisierten Lignin aus Schwarzlauge bekannt.

Aufgabe der Erfindung ist es, ein zum Beispiel als Füllstoff verwendbares partikelförmiges Kohlenstoffmaterial aus nachwachsenden Rohstoffen bereitzustellen, welches zum Beispiel eingesetzt in Kautschukmischungen nach deren Vernetzung eine vergleichbare Leistung bei gummitechnischen Kenngrößen zeigt wie ein hinsichtlich BET/STSA-Oberfläche ähnlicher klassischer Ruß. Darüber hinaus ist es Aufgabe der Erfindung ein effizientes Verfahren in Bezug auf den Einsatz von Energie und Hilfsstoffen bereitzustellen, mittels dessen das erfindungsgemäße Material hergestellt werden kann.

Die Aufgabe wird durch ein partikelförmiges Kohlenstoffmaterial mit den Merkmalen des Anspruchs 1 gelöst.

Entsprechend wird ein partikelförmiges Kohlenstoffmaterial aus nachwachsenden Rohstoffen, insbesondere aus ligninhaltiger Biomasse, mit den folgenden Merkmalen bereitgestellt:

- einen $^{14}$C-Gehalt, der dem von nachwachsenden Rohstoffen entspricht, von größer als 0,20 Bq/g Kohlenstoff, insbesondere bevorzugt größer als 0,23 Bq/g Kohlenstoff, und kleiner als 0,45 Bq/g Kohlenstoff;
- einen Kohlenstoffgehalt bezogen auf die aschefreie Trockensubstanz zwischen 60 Ma.-% und 80 Ma.-%;

- eine STSA-Oberfläche von mindestens 5 m$^2$/g und maximal 200 m$^2$/g; und
- einer Öl-Absorptionszahl (OAN) zwischen 50 ml/100g und 150ml/100g.

Wie oben erwähnt, wird als nachwachsender Rohstoff bevorzugt ligninhaltige Biomasse und hier insbesondere ligninhaltige Biomasse mit einem Anteil an Klason-Lignin von mehr als 80% verwendet (zur Bestimmung des Lignin-Anteils kommt das Klason-Verfahren zur Anwendung, bei dem die Polysaccharide durch eine zweistufige Säurehydrolyse abgebaut und der verbleibende Ligninrest als Klason-Lignin anschließend gewogen wird). Lignin fällt als Nebenprodukt von Fraktionierungsprozessen von holziger Biomasse an. Während der Fraktionierungsprozesse wird das Lignin typischerweise entweder in Lösung gebracht und dann von den nicht löslichen Bestandteilen der holzigen Biomasse abgetrennt (z.B. KRAFT Prozess) oder die holzige Biomasse wird so depolymerisiert, dass das Lignin überwiegend als Feststoff verbleibt (z.B. Hydrolyseverfahren). Das Lignin liegt demnach je nach Art des Fraktionierungsprozesses entweder gelöst in einer Lignin beinhaltenden Flüssigkeit zum Beispiel Schwarzlauge oder als in der Regel mechanisch entwässerter Feststoff vor. Liegt das Lignin gelöst in einer das Lignin beinhaltenden Flüssigkeit vor, so kann das Lignin aus dieser in der Regel zum Beispiel unter Nutzung von Säuren oder sauer wirkenden Gasen ausgefällt und als mechanisch entwässerter Feststoff gewonnen werden (vergleiche zum Beispiel LignoBoost Prozess).

Der $^{14}$C Gehalt, der dem von nachwachsenden Rohstoffen entspricht, unterscheidet das vorliegende partikelförmige Kohlenstoffmaterial, das z.B. als Füllstoff in Elastomeren, Thermo-oder Duroplasten einsetzbar ist, von klassischem Ruß der auf Basis fossiler Rohstoffe gewonnen wird. Vorliegend weist das partikelförmige Kohlenstoffmaterial einen $^{14}$C-Gehalt von größer als 0,20 Bq/g Kohlenstoff, insbesondere bevorzugt größer als 0,23 Bq/g Kohlenstoff, jedoch jeweils kleiner als 0,45 Bq/g Kohlenstoff auf.

Der $^{14}$C-Gehalt in im Jahr 1950 gewachsener Biomasse, also am Beginn der umfangreichen Atomwaffentests der Menschheit, lag bei 0,226 Bq/g Kohlenstoff. Er wuchs in der Zeit der Atomwaffentests auf bis zu 0,42 Bq/g Kohlenstoff und kehrt derzeit wieder ungefähr auf das ursprüngliche Niveau zurück. 2009 wurden 0,238 Bq/g Kohlenstoff gemessen. Zur Abgrenzung des erfindungsgemäßen Kohlenstoffmaterials gegen Materialien mit künstlich angereichertem $^{14}$C-Gehalt liegt folglich der $^{14}$C-Gehalt im erfindungsgemäßen Kohlenstoffmaterial bei höchstens 0,45 Bq/g Kohlenstoff.

Der Kohlenstoffgehalt bezogen auf die aschefreie Trockensubstanz von mehr als 60 Ma.-% und weniger als 80 Ma.-% bevorzugt von mehr 65 Ma.-% und weniger als 75 Ma.-% weiter bevorzugt von mehr als 68 Ma.-% und weniger als 74 Ma.-%, darüber hinaus bevorzugt von mehr als 70 Ma.-% und weniger als 73 Ma.-% (Kohlenstoffgehalt über Elementaranalyse nach DIN 51732; Aschegehalt nach DIN 51719 bei 815°C) unterscheidet das vorliegende als Füllstoff einsetzbare partikelförmige Kohlenstoffmaterial von als Füllstoff direkt eingesetzten nachwachsenden Rohstoffen wie Holzmehl, etc., die typischerweise über einen geringeren Kohlenstoffgehalt verfügen. Weiterhin unterscheidet der Kohlenstoffgehalt bezogen auf die aschefreie Trockensubstanz von mehr als 60 Ma.-% und weniger als 80 Ma.-% das vorliegende partikelförmige Kohlenstoffmaterial von aus nachwachsenden Rohstoffen zum Beispiel durch Fraktionierung, Extraktion, Destillation oder Kristallisation hergestellten Produkten wie Zucker, Stärke, Zellulose, etc., die typischerweise einen niedrigeren Kohlenstoffgehalt bezogen auf die aschefreie Trockensubstanz von 40 Ma.-% - 50 Ma.-% aufweisen. Weiterhin unterscheidet sich das vorliegende partikelförmige Kohlenstoffmaterial in seiner bevorzugten Ausführungsform von Lignin welches mittels eines KRAFT-Prozesses von Biomasse abgetrennt wurde, welches typischerweise einen Kohlenstoffanteil bezogen auf die aschefreie Trockensubstanz von 65 Ma.-% aufweist.

Der Kohlenstoffgehalt bezogen auf die aschefreie Trockensubstanz von mehr als 60 Ma.-% und weniger als 80 Ma.-% unterscheidet das vorliegende partikelförmige Kohlenstoffmaterial zudem von klassischem Ruß der nach den üblichen Rußherstellungsprozessen hergestellt wurde oder den Varianten des *bio-based* Carbon Blacks, welche sowohl über die üblichen Rußherstellungsverfahren aber auch zum Beispiel über Pyrolyse, partielle Oxidation, Karbonisierung oder ähnliche Verfahren hergestellt werden, die typischerweise einen höheren Kohlenstoffgehalt bezogen auf die aschefreie Trockensubstanz von ca. 95% und mehr aufweisen. Auch im Falle von hochoxidierten Rußen mit einem Gehalt an Flüchtigen Bestandteilen bei 950°C nach DIN 53552 von 20% und zusätzlich 2,5% Schwefel liegt der Kohlenstoffgehalt bezogen auf die aschefreie Trockensubstanz überschlägig über 88%.

Vorteil des im Vergleich zu Ruß niedrigen Kohlenstoffanteils des vorliegenden Produktes ist, dass die von den nachwachsenden Rohstoffen herrührende Oberflächenfunktionalität teilweise erhalten bleibt und in der Anwendung zum Beispiel über Kopplungsreagenzien nutzbar gemacht werden kann.

Die STSA-Oberfläche von mindestens 5 m$^2$/g und maximal 200 m$^2$/g, bevorzugt zwischen 8 m$^2$/g und 100 m$^2$/g unterscheidet das vorliegende partikelförmige Kohlenstoffmaterial weiterhin von nicht porösem Lignin oder nicht porösem partikelförmigen Material, welches über die hydrothermale Karbonisierung hergestellt wurde, welches üblicherweise BET-Oberflächen von weniger als 2 m$^2$/g aufweist, wobei die - in der Regel nicht gemessenen - STSA-Oberflächen naturgemäß leicht darunter liegen werden.

Weiterhin unterscheidet sich das vorliegende partikelförmige Kohlenstoffmaterial dadurch von partikelförmigen Materialien aus nachwachsenden Rohstoffen, die eine hohe spezifische BET-Oberfläche aufgrund ihrer starken Porosität aufweisen, wie zum Beispiel Pyrolysekohlen, Kohlen die über eine partielle Oxidation gewonnen wurden, Kohlen die über die hydrothermale Karbonisierung gewonnen wurden und Aktivkohlen dadurch dass das vorliegende partikelförmige Kohlenstoffmaterial weitgehend nicht porös und sehr feinteilig ist, was durch die STSA-Oberfläche erfasst wird.

In einer Variante des vorliegenden partikelförmigen Kohlenstoffmaterials weist die STSA-Oberfläche Werte zwischen 10 $m^2$/g und 80 $m^2$/g, bevorzugt zwischen 12 $m^2$/g und 70 $m^2$/g, weiter bevorzugt zwischen 15 $m^2$/g und 70 $m^2$/g, insbesondere bevorzugt zwischen 20 $m^2$/g und 70 $m^2$/g auf.

Vorteilhaft weicht die BET-Oberfläche des vorliegenden partikelförmigen Kohlenstoffmaterials nur um maximal 20% bevorzugt um maximal 15% weiter bevorzugt um maximal 10% von der STSA-Oberfläche ab. Vorteilhaft liegt das Porenvolumen des partikelförmigen Kohlenstoffmaterials bei < 0,1 $cm^3$/g, weiter bevorzugt bei < 0,01 $cm^3$/g, besonders bevorzugt bei < 0,005 $cm^3$/g. Hiermit unterscheidet sich das vorliegende partikelförmige Kohlenstoffmaterial von feinteiligen porösen Materialien wie zum Beispiel gemahlener biogener Pulveraktivkohle, die neben einer BET-Oberfläche von in der Regel mehr als 500 $m^2$/g auch eine STSA-Oberfläche von maximal 10 $m^2$/g aufweisen kann.

Vorteil der im Vergleich zu Lignin und HTC-Kohlen hohen STSA-Oberfläche ist die hohe Feinteiligkeit des Produktes, welche ein hohes Maß an Wechselwirkungen zwischen dem vorliegenden Produkt und z.B. Polymeren ermöglicht. Vorteil der fast nicht vorhandenen Porosität des vorliegenden Produktes ist, dass zum Beispiel im Vergleich zur Nutzung poröser Kohlenstoffmaterialien Additive und Vernetzungschemikalien nicht durch Eindringen in die Poren ihre Wirksamkeit verlieren können.

Vorteilhaft ist die durchschnittliche Größe der Primärteilchen des partikelförmigen Kohlenstoffmaterials jedoch auf einen Wert von größer 8 nm, bevorzugt größer 10 nm, weiter bevorzugt größer als 15 nm begrenzt.

Vorteilhaft weisen die Primärpartikel des partikelförmigen Kohlenstoffmaterials eine heterogene Größenverteilung auf. Die kleinere Partikelfraktion weist demnach eine Größe von größer 8 nm, bevorzugt größer 10 nm, weiter bevorzugt größer als 15 nm bis zu einer Größe von 250 nm auf. Die größere Partikelfraktion weist Größen oberhalb von 250 nm auf.

Vorteilhaft sind Primärpartikel zu Aggregaten verwachsen, wodurch sich die Größe der Primärpartikel von der Größe der Aggregate unterscheidet. Bevorzugt liegt dann die Größe der Primärpartikel unterhalb von 250 nm. In diesem bevorzugten Fall sind die Primärpartikel kleiner als Aggregate, bevorzugt um durchschnittlich mindestens den Faktor 2, weiter bevorzugt um durchschnittlich mindestens den Faktor 4. Zur Klarstellung sei hinzugefügt, dass auch in dieser bevorzugten Ausführungsform Primärpartikel einzeln vorliegen können und dann theoretisch mit Aggregaten gleichgesetzt werden können. In dieser bevorzugten Ausführungsform ist dies jedoch nur selten, bevorzugt zu weniger als 25%, weiter bevorzugt zu weniger als 20% besonders bevorzugt zu weniger als 15% der Fall. Dies trifft insbesondere auf Primärpartikel mit einer Größe von mehr als 250 nm zu.

Da die Größe der Primärpartikel und Aggregate über die Messung der Korngröße durch zum Beispiel Laserbeugung oder Siebanalyse nicht oder nur unzureichend zugängig ist, können zur Bestimmung dieser Größen zum Beispiel Aufnahmen mit einem Rasterelektronenmikroskop genutzt werden.

Die Öl-Absorptionszahl (OAN) zwischen 50 ml/100g und 150 ml/100g unterscheidet das vorliegende partikelförmige Kohlenstoffmaterialen von zum Beispiel durch Mahlung oder Dampfexplosion pulverisierten Kohlenstoffmaterialien, die aufgrund der fehlenden oder durch den Mahlprozess zerstörten Aggregate geringere OAN-Werte aufweisen.

In einer weiteren Variante des vorliegenden partikelförmigen Kohlenstoffmaterials liegt der OAN-Wert zwischen 65 ml/100g und 150 ml/100g, weiter bevorzugt zwischen 70 ml/100g und 130 ml/100g, darüber hinaus bevorzugt zwischen 75 ml/100g und 130 ml/100g, insbesondere bevorzugt zwischen 80 ml/100g und 120 ml/100g. Die OAN-Absorption wird gemäß der Norm ASTM D 2414-00 bestimmt.

Vorteil der hohen Öl-Absorptionszahl gegenüber Kohlenstoffprodukten mit geringerer Öl-Adsorptionszahl ist das Vorhandensein von Aggregaten, welche sich vorteilhaft auf die Wechselwirkungen zwischen dem vorliegenden partikelförmigen Kohlenstoffmaterial und zum Beispiel Polymeren auswirken.

In einer Variante weist das vorliegende partikelförmige Kohlenstoffmaterial einen Wassergehalt von kleiner 5 Ma.-%, bevorzugt kleiner 3 Ma.-%, weiter bevorzugt kleiner 2 Ma.-% auf. Der vorliegend niedrige Wassergehalt bzw. der Trockenzustand des Kohlenstoffmaterials ermöglicht dessen Einarbeitung z.B. als Füllstoff in Polymere, weil eine Erzeugung von Dampfblasen bei hoher Temperatur vermieden wird. Zudem ist eine erhöhte Feuchte des Kohlenstoffmaterials für die Anwendung von Kopplungsreagenzien störend.

In einer weiteren Ausführungsform weist eine 15%ige Suspension des partikelförmigen Kohlenstoffmaterials in destilliertem Wasser eine elektrische Leitfähigkeit von weniger als 5 mS/cm, bevorzugt weniger als 3 mS/cm und besonders bevorzugt von weniger als 2 mS/cm auf. Die elektrische Leitfähigkeit (ermittelt als Leitwert der Messsonde des Gerätes PCE-PHD1 bei 20°C bis 25°C) dient vorliegend als Maß für den Ionengehalt bzw. die Ionen-Konzentration, insbesondere von Ionen ausgewählt aus der Gruppe enthaltend $Na^+$, $Ca^{2+}$, $SO_4^{2-}$, $CO_3^{2-}$, $S^{2-}$, $HS^-$. Vorteil der geringen Leifähigkeit ist der geringe Anteil an wasserlöslichen Ionen, welche sich auch bei der Nutzung zum Beispiel in Polymeren von dem vorliegenden Produkt separieren könnten.

Auch weist eine Ausführungsform des partikelförmigen Kohlenstoffmaterials in einer 15%igen Suspension in destilliertem Wasser einen pH-Wert von > 6, bevorzugt > 7, weiter bevorzugt > 8 auf. Bevorzugt liegt der pH-Wert einer 15%igen Suspension des partikelförmigen Kohlenstoffmaterials in destilliertem Wasser bei weniger als 10, weiter bevorzugt bei weniger als 9. Vorteil des neutralen oder leicht basischen pH-Werts des vorliegenden Produktes ist zum Beispiel seine gute Kompatibilität zu den anderen Bestandteilen der Polymermischung.

Es ist auch von Vorteil, wenn das vorliegende partikelförmige Kohlenstoffmaterial ein D/G-Signalverhältnis im Raman-Spektrum zwischen 0,20 und 0,90, bevorzugt zwischen 0,40 und 0,75, weiter bevorzugt zwischen 0,45 und 0,70 als Maß für den Anteil an graphitischem Kohlenstoff aufweist.

Als Maß für den Anteil an graphitischem Kohlenstoff im Material kann das Flächenverhältnis D/G der D-Bande zur G-Bande im Ramanspektrum herangezogen werden. Die D-Bande *(disorder band)* liegt oberhalb von 1300 cm-1 bis ungefähr 1360 cm-1 und die G-Bande *(graphite band)* liegt bei ungefähr 1580-1590 cm-1. Zur Berechnung des Flächenverhältnisses D/G werden die Integrale des Ramanspektrums über die D-Bande und über die G-Bande berechnet und dann ins Verhältnis gesetzt.

Vorteil der angegeben D/G-Verhältnis ist, dass sich das Material in einigen Anwendungen - bedingt durch seinen Anteil an graphitischem Kohlenstoff - wie ein klassischer Ruß nutzen lässt und darüber hinaus - bedingt durch seinen Anteil an amorphem Kohlenstoff und die daran gebundenen Elemente - weitere Funktionalitäten zur Verfügung stehen.

In einer weiteren Ausführungsform weist das vorliegende partikelförmige Kohlenstoffmaterial eine geringe Löslichkeit in basischer Lösung auf.

Vorteilhaft weist das vorliegende partikelförmige Kohlenstoffmaterial demnach eine hohe Beständigkeit gegenüber Basen auf. Unter einer hohen Beständigkeit gegenüber Basen ist vorliegend zu verstehen, dass weniger als 40% bevorzugt weniger als 30%, besonders bevorzugt weniger als 15%, insbesondere weniger als 10% des vorliegenden partikelförmigen Kohlenstoffmaterials in Lösung gehen. Bevorzugt wird zur Bestimmung der Basenbeständigkeit wie folgt vorgegangen:

- Einwaage von festem, trockenem partikelförmigen Kohlenstoffmaterial, das zuvor zweimal mit jeweils der fünffachen Masse destilliertem Wasser gewaschen wurde;
- Suspension in destilliertem Wasser, so dass der Trockensubstanzgehalt bei 5% liegt,
- Erhöhung des pH-Wertes des destillierten Wassers durch Zugabe von Natronlauge auf einen Wert von etwa 9,
- Erhöhung der Temperatur der im pH-Wert eingestellten Suspension aus dem vorliegenden Kohlenstoffmaterial und destilliertem Wasser auf etwa 80°C,
- Rühren über eine Zeit von 2 Stunden bei vorstehenden Bedingungen,
- nach einer Abkühlung der Suspension auf Raumtemperatur den Vorgang beginnend bei dem Schritt der pH-Werteinstellung so lange wiederholen, bis der pH-Wert nach der Abkühlung der Suspension auf Raumtemperatur wiederum etwa 9 entspricht,
- Zentrifugation der Suspension über 15 Minuten bei 9000 Umdrehungen pro Minute,
- Abtrennung der Flüssigphase und Trocknung des verbleibenden festen Rückstandes und
- Wägung des getrockneten Rückstandes.

Die Basenbeständigkeit in Prozent wird ermittelt, indem die Trockenmasse des gewogenen Rückstandes durch die Trockenmasse des eingewogenen partikelförmigen Kohlenstoffmaterials geteilt und mit 100 multipliziert wird. Die Löslichkeit des partikelförmigen Kohlenstoffmaterials in Prozent wird durch Subtraktion der Basenbeständigkeit von 100 ermittelt.

Insofern unterscheidet sich das erfindungsgemäße partikelförmige Kohlenstoffmaterial von Lignin dadurch, dass seine Beständigkeit gegenüber Basen deutlich erhöht ist. Dies hat den Vorteil, dass das vorliegende partikelförmige Kohlenstoffmaterial z.B. im Falle der Verwendung als Füllstoff in Kautschukprodukten oder Kunststoffprodukten bei Kontakt mit Wasser aus dem Kautschukprodukt oder Kunststoffprodukt nicht leicht auswaschbar ist.

Vorteilhaft weist das erfindungsgemäße partikelförmige Kohlenstoffmaterial eine mit Kieselsäure vergleichbare Oberflächenchemie auf. Mit einer mit Kieselsäure vergleichbare Oberflächenchemie ist gemeint, dass das vorliegende Kohlenstoffmaterial hohe OH-Gruppendichte aufweist. Insbesondere liegt der Sauerstoffgehalt des vorliegenden aschefreien partikelförmigen Kohlenstoffmaterials zwischen 20 Ma.-% und 30 Ma.-%, bevorzugt zwischen 20 Ma.-% und 25 Ma.-%.

Insofern unterscheidet sich das vorliegende partikelförmige Kohlenstoffmaterial von Ruß, der zum Beispiel durch eine intensive Karbonisierung (Pyrolyse, Oxidation, hydrothermale Karbonisierung etc.) aus nachwachsenden Rohstoffen gewonnen wird dadurch, dass die funktionellen Gruppen der zur Herstellung des vorliegenden partikelförmigen Kohlenstoffmaterial eingesetzten nachwachsenden Rohstoffe nicht durch die thermische Behandlung weitgehend abgetrennt wurden, sondern weiterhin für die Anbindung an Polymere oder Kopplungsreagenzien zur Verfügung stehen.

Bevorzugt liegt der Aschegehalt des partikelförmigen Kohlenstoffmaterials bezogen auf die Trockensubstanz bei mindestens 1 Ma.-% aber weniger als 8 Ma.-%, weiter bevorzugt bei mindestens 2 Ma.-% und weniger als 6 Ma.-%, darüber hinaus bevorzugt bei mindestens 3 Ma.-% und weniger als 6 Ma.-%, insbesondere bei mindestens 4 Ma.-% und weniger als 6 Ma.-% (Aschegehalt nach DIN 51719 bei 815°C).

In einer weitergehenden Variante des vorliegenden partikelförmigen Kohlenstoffmaterials liegt der D90 der Q3 Verteilung der Korngröße (als Maß für die Größe der unter den konkreten Bedingungen separiert vorliegenden Teilchen) bei weniger als 30 $\mu$m, bevorzugt bei weniger als 20 $\mu$m, weiter bevorzugt bei weniger als 15 $\mu$m, weiter bevorzugt bei weniger als 10 $\mu$m, insbesondere bei weniger als 5 $\mu$m. In einer weitergehenden Variante des vorliegenden partikelförmigen Kohlenstoffmaterials liegt der D99 der Q3 Verteilung der Korngröße bei weniger als 30 $\mu$m, bevorzugt bei weniger als 20 $\mu$m, weiter bevorzugt bei weniger als 15 $\mu$m, weiter bevorzugt bei weniger als 10 $\mu$m, insbesondere bei weniger am 5 $\mu$m. In einer weitergehenden Variante des vorliegenden partikelförmigen Kohlenstoffmaterials liegt der D99 der Q3 Verteilung der Korngröße bei mehr als 1 $\mu$m bevorzugt bei mehr als 2 $\mu$m.

Vorteil der oben angegebenen maximalen Werte der Q3 Verteilung der Korngröße ist, dass das vorliegende partikelförmige Kohlenstoffmaterial beim Einsatz zum Beispiel in Polymeren bedingt durch die maximale Größe der separiert vorliegenden Teilchen keine Störstelle verursacht, welche zum Beispiel zu einem vorzeitigen Reißen oder Brechen des Polymers oder zu Oberflächendefekten bei der Extrusion führen.

Dabei ist vorteilhaft der unter Zuhilfenahme der STSA-Oberfläche ermittelte durchschnittliche Kugeldurchmesser unter Annahme einer Materialdichte (Rohdichte) von 1500 kg/m$^3$ mindestens 2-mal, bevorzugt mindestens 3-mal, weiter bevorzugt mindestens 4-mal, insbesondere mindestens 6-mal kleiner als der über die Q3 Verteilung der Korngröße gemessene durchschnittliche Durchmesser (D50) des separiert vorliegenden Teilchens. Dabei wird der durchschnittliche Kugeldurchmesser unter Zuhilfenahme der folgenden Formeln berechnet:

1.

$$\text{STSA-Oberfläche} = \text{Kugeloberfläche} / (\text{Kugelvolumen} * \text{Materialdichte})$$

2.

$$\text{Kugeloberfläche} = \text{PI} * \text{durchschnittlicher Kugeldurchmesser}^2$$

3.

$$\text{Kugelvolumen} = 1/6 * \text{PI} * \text{durchschnittlicher Kugeldurchmesser}^3$$

Durch Einsetzen von 2. und 3. in 1. ergibt sich folgender Zusammenhang:

$$\text{durchschnittlicher Kugeldurchmesser} = 6 / (\text{STSA-Oberfläche} * \text{Materialdichte})$$

Die Messung der Korngrößenverteilung des partikelförmigen Kohlenstoffmaterials erfolgt in einer 10% Suspension mit destilliertem Wasser mittels Laserbeugung. Vor und/oder während der Messung der Korngrößenverteilung wird die zu vermessende Probe mit Ultraschall so lange dispergiert, bis eine über mehrere Messungen stabile Korngrößenverteilung erhalten wird.

Die STSA-Oberfläche des vorliegenden partikelförmigen Kohlenstoffmaterials ist bevorzugt weitgehend unabhängig von dessen Q3 Verteilung der Korngröße und charakterisiert die Feinteiligkeit der Primärteilchen.

In einer bevorzugten Ausführungsform hat das vorliegende partikelförmige Kohlenstoffmaterial

- einen $^{14}$C-Gehalt, der dem von nachwachsenden Rohstoffen entspricht, von größer als 0,20 Bq/g Kohlenstoff, insbesondere bevorzugt größer als 0,23 Bq/g Kohlenstoff, jedoch jeweils kleiner als 0,45 Bq/g Kohlenstoff;
- einen Kohlenstoffgehalt bezogen auf die aschefreie Trockensubstanz zwischen 60 Ma.-% und 80 Ma.-%;
- eine STSA-Oberfläche von mindestens 5 m$^2$/g und maximal 200 m$^2$/g;
- einer Öl-Absorptionszahl (OAN) zwischen 50 ml/100g und 150ml/100g; und
- einen D90 der Q3 Verteilung der Korngröße von weniger als 20 $\mu$m, bevorzugt von weniger als 15 $\mu$m.

Vorteilhaft weist das vorliegende partikelförmige Kohlenstoffmaterial eine Form auf, die weitgehend der Form von klassischem Ruß entspricht. Eine mit klassischem Ruß vergleichbare Form des vorliegenden partikelförmigen Kohlenstoffmaterials ist beispielweise dadurch gegeben, dass das partikelförmige Kohlenstoffmaterial

- aus wenig porösen Primärpartikeln besteht,
- von denen mehrere zu Aggregaten verwachsen sind und

- diese wiederum zumindest teilweise agglomeriert sind.

Insofern unterscheidet sich das vorliegende u.a. als Füllstoff einsetzbare partikelförmige Kohlenstoffmaterial von Füllstoffen nach dem Stand der Technik, die zum Beispiel durch eine Mahlung von nachwachsenden Rohstoffen gewonnen werden dadurch, dass der Füllstoff eine deutliche Struktur aufweist, welche mit der Struktur von klassischen Rußen vergleichbar ist. Die Form kann zum Beispiel durch REM-Aufnahmen ermittelt werden.

Das als Füllstoff einsetzbare partikelförmige Kohlenstoffmaterial hat bevorzugt eine nichtfaserige Morphologie, damit ist gemeint, dass das Aspekt-Verhältnis kleiner 10, bevorzugt kleiner 5 ist.

In einer anderen bevorzugten Ausführungsform hat das vorliegende partikelförmige Kohlenstoffmaterial

- einen $^{14}$C-Gehalt, der dem von nachwachsenden Rohstoffen entspricht, von größer als 0,20 Bq/g Kohlenstoff, insbesondere bevorzugt größer als 0,23 Bq/g Kohlenstoff, jedoch jeweils kleiner als 0,45 Bq/g Kohlenstoff;
- einen Kohlenstoffgehalt bezogen auf die aschefreie Trockensubstanz von mehr als 60 Ma.-% und weniger als 80 Ma.-%;
- eine STSA von mindestens 5 m$^2$/g und maximal 200 m$^2$/g;
- eine OAN von 50 ml/100g - 150 ml/100g;
- eine mit Kieselsäure vergleichbare Oberflächenchemie; und
- eine Form die weitgehend der Form von klassischem Ruß entspricht.

Durch die vorteilhafte Kombination der Eigenschaften eines klassischen Rußes in Bezug auf dessen Form mit denen von Kieselsäure in Bezug auf deren Oberflächenchemie besitzt diese bevorzugte Ausführungsform des vorliegenden partikelförmigen Kohlenstoffmaterials ein ähnliches Potenzial für Wechselwirkungen zwischen Füllstoff und Polymer wie ein klassischer Ruß und ermöglicht, dass dieses Wechselwirkungspotenzial zusätzlich über einen ähnlichen Mechanismus wie bei Kieselsäure z.B. durch Kopplungsreagenzien ergänzt wird.

Das partikelförmige Kohlenstoffmaterial kann beispielsweise als Füllstoff oder verstärkender Füllstoff verwendet werden. Das erfindungsgemäße partikelförmige Kohlenstoffmaterial kann zum Beispiel in Kautschuk und Kautschukmischungen oder Kunststoff eingesetzt werden.

Ein weiterer Gegenstand der Offenbarung sind Polymermischungen, welche dadurch gekennzeichnet sind, dass sie mindestens ein Polymer und mindestens ein erfindungsgemäßes partikelförmiges Kohlenstoffmaterial enthalten. Polymere können Thermoplaste, Duroplaste oder Elastomere sein.

Eine Liste von Polymeren ist beispielsweise in WO 2010/043562 A1 von Seite 10, Zeile 20 bis Seite 12, Zeile 36 angegeben, in welche das erfindungsgemäße partikelförmige Kohlenstoffmaterial eingebracht werden kann. Bevorzugte Polymere sind ausgewählt aus einer Liste mit folgenden Kunststoffen oder Kautschuken: Polyester, Polyethylen, Polypropylen, Polyestercarbonate, Polyamide, Polyimide, Polyesteramide, Polyetherimide, Polyurethane, Polyvinylalkohole, Polyvinylacetate, Polyvinylchloride, Polymethacrylate, Polystyrole, Styrol-Maleinsäureanhydrid, Polycaprolactone, Polybutylenterephthalate, Polyepoxide; Celluloseprodukte wie Celluloseacetat oder Cellulosenitrat, Vulkanfiber, Polymilchsäure, Polyhydroxyalkanoate, Chitin, Casein, Gelatine; Formaldehyd-Harze, wie Melamin-Formaldehyd-Harz, Harnstoff-Formaldehyd-Harz, Melamin-Phenol-Harze, Phenol-Formaldehyd-Harze; Silikon-Polymer, Naturkautschuk, Styrol-Butadien-Copolymere, Polybutadien, Polyisopren, Isobutylen-Isopren-Copolymere, Ethylen-Propylen-Dien-Copolymere, Acrylnitril-Butadien-Copolymere, Chloropren, Fluor-Kautschuk oder Acryl-Kautschuk sowie Mischungen daraus.

Ein weiterer Gegenstand der Offenbarung sind Kautschukmischungen, welche dadurch gekennzeichnet sind, dass sie mindestens einen Kautschuk und mindestens eine erfindungsgemäßes partikelförmiges Kohlenstoffmaterial enthalten.

Das partikelförmige Kohlenstoffmaterial kann in Mengen von 10 Ma.-% bis 150 Ma.-%, bevorzugt 20 Ma.-% bis 120 Ma.-%, weiterhin bevorzugt 40 Ma.-% bis 100 Ma.-%, besonders bevorzugt 50 Ma.-% bis 80 Ma.-%, bezogen auf die Masse des eingesetzten Kautschuks, eingesetzt werden.

Die Kautschukmischung enthält bevorzugt mindestens das erfindungsgemäße partikelförmige Kohlenstoffmaterial und daneben natürlich vorkommende mineralische, silikatische, kalkartige oder kalkhaltige Füllstoffe.

Bevorzugt enthält die Kautschukmischung das erfindungsgemäße partikelförmige Kohlenstoffmaterial und ein Kopplungsreagenz, bevorzugt ein Organosilan. Die Organosilane können beispielsweise Bis(trialkoxysilylalkyl)-oligo- oder -poly-sulfid, beispielsweise Bis(triethoxysilylpropyl)disulfid oder Bis(triethoxysilylpropyl)tetrasulfid, Mercaptosilane, Aminosilane, Silane mit ungesättigten Kohlenwasserstoffgruppen, beispielsweise Vinylsilane sein. Letztlich können auch Silane mit großen gesättigten Kohlenwasserstoffgruppen, beispielsweise Dodecyltriethoxysilan, wie Kopplungsreagenzien wirken, wobei jedoch keine kovalenten Bindungen, sondern eher van-der-Waals-Kräfte für eine gewisse Kopplung an das Polymer sorgen.

Das Organosilan wird bevorzugt in Mengen von 2 Ma.-% bis 16 Ma.-%, weiter bevorzugt 4 Ma.-% bis 14 Ma.-%, besonders bevorzugt 6 Ma.-% bis 12 Ma.-% bezogen auf die Masse des eingesetzten partikelförmigen Kohlenstoffmaterials, eingesetzt.

Bei Nutzung eines Organosilans zusammen mit einer Ausprägung des erfindungsgemäßen partikelförmigen Kohlenstoffmaterials mit einer STSA-Oberfläche, die vergleichbar mit der eines nicht aktiven Rußes ist, werden bevorzugt im vernetzen Zustand der Gummimischung ausgewählte gummitechnische Kennwerte erreicht, die vergleichbar zu denen sind, die bei Nutzung eines Halbaktiv-Ruß oder einer Kieselsäure zusammen mit einem Organosilan erreicht werden.

Bei Nutzung eines Organosilans zusammen dem erfindungsgemäßen partikelförmigen Kohlenstoffmaterial, werden bevorzugt im vernetzen Zustand der Gummimischung ausgewählte gummitechnische Kennwerte nicht nur erreicht, sondern auch übertroffen, welche bei Nutzung eines Ruß mit einer zu der des partikelförmigen Kohlenstoffmaterials vergleichbaren STSA-Oberfläche erreicht werden.

In einer weiteren bevorzugten Variante enthält die Kautschukmischung das erfindungsgemäße partikelförmige Kohlenstoffmaterial und ein die funktionellen Gruppen maskierendes Reagenz, bevorzugt ein Organosilan, ein Amin oder ein Glykol. In diesem Zusammenhang können als Amin zum Beispiel Triethanolamin, Hexamethylentetramin, Di-o-tolylguanidin oder Diphenylguanidin eingesetzt werden. Als Glykol können Ethylenglykol, Tetraethylenglykol oder Polyethylenglykol zum Einsatz kommen. Das Organosilan kann ein Trialkoxysilylalkylsilan, beispielsweise Triethoxymethysilan, Triethoxyethysilan oder Triethoxypropylsilan sein. Die genannten Reagenzien sind nicht in der Lage über Schwefelbrücken in die Vernetzung eingebaut zu werden. Sie reagieren aber mit der Oberfläche des erfindungsgemäßen Kohlenstoffmaterials unter Verbrauch der funktionellen Gruppen, so dass diese die Schwefelvernetzung weniger beeinträchtigen. Somit wirken die Triethoxyalkylsilane nicht wie ein Kopplungsreagenz. Außer der Vermeidung einer gestörten Schwefelvernetzung, wirken solche Silane allerdings als Kompatibilisoren, welche die Oberflächenenergie der Füllstoffpartikel an die der Polymermatrix anpassen, und so zu einer deutlich verbesserten Dispergierbarkeit führen.

Bevorzugt kann Ruß in einer Gummimischung zu bis zu 100% durch das vorliegende partikelförmige Kohlenstoffmaterial substituiert werden und trotzdem im vernetzten Zustand eine vergleichbare Leistung wie mit dem Ruß hinsichtlich ausgewählter gummitechnischer Kennwerte erreicht werden.

Bevorzugt kann weiterhin Kieselsäure in einer Gummimischung zu bis zu 100% durch das vorliegende partikelförmige Kohlenstoffmaterial substituiert werden und trotzdem im vernetzen Zustand eine vergleichbare Leistung wie mit der Kieselsäure hinsichtlich ausgewählter gummitechnischer Kennwerte erreicht werden, wobei bevorzugt ein Organosilan verwendet wird.

Bevorzugte gummitechnische Kennwerte sind der Modulus 50% und Modulus 200% ermittelt im Zugversuch. Bevorzugt sind hohe Werte für den Modulus 50% und Modulus 200%.

Weiterer bevorzugter gummitechnischer Kennwert ist der Verlustfaktor tan delta (Quotient aus Verlustmodul E" und Speichermodul E' des Elastomerwerkstoffs) bei Temperaturen zwischen 40°C, bevorzugt 50°C, weiter bevorzugt 60°C und 100°C bestimmt in einer dynamisch mechanischen Analyse *(temperature sweep)*. Dieser Kennwert ist ein gängiger Prädiktorwert für die Rollreibung in der Reifenindustrie. Bevorzugt sind niedrige Werte für den tan delta in dem angegeben Temperaturbereich, weiter bevorzugt beträgt die tan delta-Absenkung mindestens 10% gegenüber der Carbon Black-Referenz, ganz besonders bevorzugt beträgt die tan delta-Absenkung mindestens 15 % gegenüber der Carbon Black-Referenz. Zusätzlicher bevorzugter gummitechnischer Kennwert ist der Verlustfaktor tan delta bei 0°C bestimmt in einer dynamisch mechanischen Analyse *(temperature sweep)*. Dieser Kennwert ist ein gängiger Prädiktorwert für den Nassgriff in der Reifenindustrie, wobei für tan delta 0 °C hohe Werte bevorzugt werden, weiter bevorzugt beträgt die tan delta-Anhebung mindestens 10% gegenüber der Carbon Black-Referenz.

Die Kautschukmischung enthält in einer bevorzugten Ausführungsform neben dem partikelförmigen Kohlenstoffmaterial auch Ruße, vorzugsweise Halbaktiv-Ruße oder Aktiv-Ruße enthalten.

Diese Kautschukmischung enthält bevorzugt mindestens das partikelförmige Kohlenstoffmaterial, mindestens einen Ruß bevorzugt einen Halbaktiv-Ruß oder einen Aktiv-Ruß und natürlich vorkommende mineralische, silikatische, kalkartige oder kalkhaltige Füllstoffe.

Diese Kautschukmischung enthält bevorzugt mindestens das partikelförmige Kohlenstoffmaterial, mindestens einen Ruß bevorzugt einen Halbaktiv-Ruß oder einen Aktiv-Ruß und natürlich vorkommende mineralische, silikatische, kalkartige oder kalkhaltige Füllstoffe und mindestens ein Organosilan.

Der Vorteil der gleichzeitigen Verwendung des partikelförmigen Kohlenstoffmaterials zusammen mit einem Ruß ist, dass bestimmte gummitechnische Kennwerte der vulkanisierten Gummimischung verbessert werden können.

Die Kautschukmischung enthält in einer anderen Ausführungsform bevorzugt neben dem erfindungsgemäßen partikelförmigen Kohlenstoffmaterial auch Kieselsäuren, vorzugsweise gefällte und pyrogene Kieselsäuren, und kann weiterhin natürlich vorkommende, mineralische, silikatische, kalkartige oder kalkhaltige Füllstoffe und ein Organosilan enthalten.

Für die Herstellung der hierin offenbarten Kautschukmischungen eignen sich neben Naturkautschuk (NR) auch Synthesekautschuke. Bevorzugte Synthesekautschuke sind beispielsweise bei W. Hofmann, Kautschuktechnologie, Genter Verlag, Stuttgart 1980 oder in WO 2010/043562 von Seite 15, Zeile 4 bis Seite 15, Zeile 24 beschrieben. Weitere bevorzugte Synthesekautschuke sind ferner in der folgenden Liste angegeben: Styrol-Butadien-Copolymere (SBR), Polybutadien (BR), Polyisopren, Isobutylen-Isopren-Copolymere, Ethylen-Propylen-Dien-Copolymere, Acrylnitril-Butadien-Copolymere (NBR), Chloropren, Fluor-Kautschuk oder Acryl-Kautschuk sowie Mischungen daraus.

Die hierin offenbarten Kautschukmischungen können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, alkoxy-terminiertes Polyethylenglykol oder Hexantriol, die der Kautschukindustrie bekannt sind.

Als Vernetzer können Schwefel, organische Schwefelspender oder Radikalbildner dienen. Die hierin offenbarten Kautschukmischungen können darüber hinaus Vulkanisationsbeschleuniger enthalten.

Die Abmischung der Kautschuke mit dem partikelförmigen Kohlenstoffmaterial, gegebenenfalls Rußen, gegebenenfalls Kieselsäuren, gegebenenfalls Kautschukhilfsstoffen und gegebenenfalls Organosilane kann in üblichen Mischaggregaten, wie Walzwerken, Innenmischern und Mischextrudern, durchgeführt werden. Üblicherweise werden solche Kautschukmischungen im Innenmischer hergestellt, wobei zunächst in einer oder mehreren aufeinanderfolgenden thermomechanischen Mischstufen die Kautschuke, das partikelförmige Kohlenstoffmaterial, gegebenenfalls Ruße, gegebenenfalls Kieselsäure, gegebenenfalls Kautschukhilfsstoffe und gegebenenfalls Organosilane bei 100°C bis 170°C eingemischt werden. Dabei können sich die Zugabereihenfolge und der Zugabezeitpunkt der Einzelkomponenten entscheidend auf die erhaltenen Mischungseigenschaften auswirken. Die so erhaltene Kautschukmischung wird dann üblicherweise in einem Innenmischer oder auf einem Walzwerk bei 40-120°C mit den Vernetzungschemikalien versetzt und zur sogenannten Rohmischung für die nachfolgenden Prozessschritte, wie zum Beispiel Formgebung und Vulkanisation, verarbeitet.

Die Vulkanisation der hierin offenbarten Kautschukmischungen kann bei Temperaturen von 80°C bis 200°C, bevorzugt 130°C bis 180°C, gegebenenfalls unter Druck von 10 bis 200 bar erfolgen.

Die hierin offenbarten Kautschukmischungen eignen sich zur Herstellung von Kautschukartikeln, also Artikeln aus den fertig vernetzten respektive vulkanisierten Elastomeren, sogenannten Formkörpern, zum Beispiel zur Herstellung von Luftreifen, Reifenlaufflächen, Reifenseitenwänden, Kabelmänteln, Schläuchen, Treibriemen, Förderbändern, Walzenbelägen, Reifen, Schuhsolen, Puffern, Dichtungsringen, Profilen und Dämpfungselementen.

Ein weiterer Gegenstand der Offenbarung sind Kunststoffmischungen, welche dadurch gekennzeichnet sind, dass sie mindestens einen Kunststoff und mindestens einen erfindungsgemäßen partikelförmigen Kohlenstoff enthalten. Kunststoff bedeutet in diesem Zusammenhang ein Thermoplast oder Duroplast.

Das partikelförmige Kohlenstoffmaterial kann in Mengen von 10 Ma.-% bis 150 Ma.-%, bevorzugt 20 Ma.-% bis 120 Ma.-%, weiterhin bevorzugt 30 Ma.-% bis 100 Ma.-% bezogen auf die Masse des eingesetzten Kunststoffes, eingesetzt werden.

Bevorzugt enthält die Kunststoffmischung das erfindungsgemäße partikelförmige Kohlenstoffmaterial und einen Haftvermittler bzw. ein Kopplungsreagenz.

Bevorzugt basiert die Haftvermittlung auf der Verwendung von Maleinsäureanhydrid oder anderen organischen Säuren, bevorzugt ungesättigten Carbonsäuren. Als Haftvermittler können zum Beispiel auch Silane, bevorzugt mit besonders großen Kohlenwasserstoffresten, beispielsweise Triethoxydodecylsilan, verwendet werden.

Der Haftvermittler wird bevorzugt in Mengen von 2 Ma.-% bis 16 Ma.-%, weiter bevorzugt 4 Ma.-% bis 14 Ma.-%, besonders bevorzugt 6 Ma.-% bis 12 Ma.-% bezogen auf die Masse des eingesetzten Kunststoffs eingesetzt.

Kunststoffe können beispielsweise Polyethylen (PE), Polypropylen (PP), Polyvinylacetat (PVA) oder Thermoplastische Elastomere (TPE) sein. Die erfindungsgemäßen Kunststoffmischungen werden bevorzugt zur Herstellung von Kabeln, Rohren, Fasern, Folien, insbesondere Agrarfolien, technischen Kunststoffen und Spritzgussartikeln verwendet.

Das vorliegende partikelförmige Kohlenstoffmaterial wird in einem hierin offenbarten Verfahren hergestellt welches insbesondere die Einstellung der STSA-Oberfläche und des OAN-Wertes auf den oben angegebenen Bereich ermöglicht.

Hierin wird ein mehrstufiges, insbesondere vierstufiges Verfahren zur hydrothermalen Behandlung insbesondere Karbonisierung von nachwachsenden Rohstoffen, insbesondere von nachwachsenden Rohstoffen mit einem Anteil von mehr als 80% Klason Lignin, offenbart, indem

- in einem ersten Schritt eine den nachwachsenden Rohstoff enthaltende Flüssigkeit bereitgestellt wird,
- die in einem zweiten Schritt einer hydrothermalen Behandlung bei einer Temperatur zwischen 150°C und 250°C unterzogen wird,
- in einem dritten Schritt, der nach der hydrothermalen Behandlung vorliegende Feststoff von der Flüssigkeit weitgehend abgetrennt wird und
- die Restfeuchte des Feststoffes in einem vierten Schritt durch Trocknung weitgehend entfernt wird, wodurch ein partikelförmiges Kohlenstoffmaterial erhalten wird,

wobei die STSA-Oberfläche und der OAN-Wert des im vierten Schritt erhaltenen partikelförmigen Kohlenstoffmaterials durch die gegenseitige Abstimmung

- der Konzentration der organischen Trockenmasse des nachwachsenden Rohstoffes in der den nachwachsenden Rohstoff enthaltenden Flüssigkeit,
- des pH-Wert der den nachwachsenden Rohstoff enthaltenden Flüssigkeit,
- der Konzentration an anorganischen Ionen in der den nachwachsenden Rohstoff enthaltenden Flüssigkeit,
- der Temperatur der hydrothermalen Behandlung und
- der Verweilzeit in der hydrothermalen Behandlung

kontrolliert und so eine STSA-Oberfläche von mindestens 5 $m^2$/g und maximal 200 $m^2$/g und ein OAN-Wert von mindestens 50 ml/100g und maximal 150ml/100g eingestellt wird.

Bevorzugt wird statt der Konzentration der anorganischen Ionen der den nachwachsenden Rohstoff beinhaltenden Flüssigkeit der Leitwert der den nachwachsenden Rohstoff beinhaltenden Flüssigkeit herangezogen.

Durch die gegenseitige Abstimmung von pH-Wert, der Leitfähigkeit und des Anteils an organischer Trockenmasse sowie der Temperatur und der Verweilzeit in der hydrothermalen Behandlung werden während der hydrothermalen Behandlung Bedingungen durchlaufen, die zur Gewinnung des vorliegenden partikelförmigen Kohlenstoffmaterials führen. Insbesondere verändern sich pH-Wert und Leitfähigkeit während der hydrothermalen Behandlung und bilden erst im Verlauf des Prozesses die Bedingungen, die das vorliegende partikelförmige Kohlenstoffmaterial hervorbringen.

Bevorzugt wird die STSA-Oberfläche und der OAN-Wert des im vierten Schritt erhaltenen partikelförmigen Kohlenstoffmaterials durch die gegenseitige Abstimmung

- der Konzentration der organischen Trockenmasse des nachwachsenden Rohstoffes in der den nachwachsenden Rohstoff enthaltenden Flüssigkeit,
- des pH-Wert der den nachwachsenden Rohstoff enthaltenden Flüssigkeit,
- der Konzentration an anorganischen Ionen in der den nachwachsenden Rohstoff enthaltenden Flüssigkeit,
- der Temperatur der hydrothermalen Behandlung und
- der Verweilzeit in der hydrothermalen Behandlung

kontrolliert und die gewünschte STSA-Oberfläche dadurch eingestellt, dass bei einer gewünschten Erhöhung der STSA-Oberfläche

- die Konzentration der organischen Trockenmasse des nachwachsenden Rohstoffes in der den nachwachsenden Rohstoff enthaltenden Flüssigkeit herabgesetzt und/oder
- der pH-Wert der den nachwachsenden Rohstoff enthaltenden Flüssigkeit erhöht und/oder
- die Konzentration an anorganischen Ionen in der den nachwachsenden Rohstoff enthaltenden Flüssigkeit herabgesetzt wird.

Weiterhin bevorzugt wird die gewünschte STSA-Oberfläche dadurch eingestellt, dass bei einer gewünschten Erhöhung der STSA-Oberfläche die Temperatur der hydrothermalen Behandlung erhöht und/oder die Verweilzeit in der hydrothermalen Behandlung verlängert wird.

Bevorzugt wird bei einer gewünschten Erhöhung der STSA-Oberfläche die Temperatur der hydrothermalen Behandlung erhöht und/oder die Verweilzeit in der hydrothermalen Behandlung verlängert, wenn die Ausbeute an trockenem partikelförmigem Kohlenstoffmaterial sehr gering ist, bevorzugt bei weniger als 10%, weiterhin bevorzugt bei weniger als 20%, darüber hinaus bevorzugt bei weniger als 30%, besonders bevorzugt bei weniger als 40% jeweils bezogen auf die Trockenmasse des nachwachsenden Rohstoffs liegt.

Bevorzugt wird die STSA-Oberfläche und der OAN-Wert des im vierten Schritt erhaltenen partikelförmigen Kohlenstoffmaterials durch die gegenseitige Abstimmung

- der Konzentration der organischen Trockenmasse des nachwachsenden Rohstoffes in der den nachwachsenden Rohstoff enthaltenden Flüssigkeit,
- des pH-Wert der den nachwachsenden Rohstoff enthaltenden Flüssigkeit,
- der Konzentration an anorganischen Ionen in der den nachwachsenden Rohstoff enthaltenden Flüssigkeit,
- der Temperatur der hydrothermalen Behandlung und
- der Verweilzeit in der hydrothermalen Behandlung

kontrolliert und die gewünschte STSA-Oberfläche dadurch eingestellt, dass bei einer gewünschten Erniedrigung der STSA-Oberfläche

- die Konzentration der organischen Trockenmasse des nachwachsenden Rohstoffes in der den nachwachsenden Rohstoff enthaltenden Flüssigkeit heraufgesetzt und/oder
- der pH-Wert der den nachwachsenden Rohstoff enthaltenden Flüssigkeit erniedrigt und/oder
- die Konzentration an anorganischen Ionen in der den nachwachsenden Rohstoff enthaltenden Flüssigkeit heraufgesetzt wird.

Weiterhin bevorzugt wird die gewünschte STSA-Oberfläche dadurch eingestellt, dass bei einer gewünschten Erniedrigung der STSA-Oberfläche die Temperatur der hydrothermalen Behandlung abgesenkt und/oder die Verweilzeit in der hydrothermalen Behandlung verkürzt wird.

Mit Temperatur und Verweilzeit ist nicht nur die maximale Temperatur gemeint, die über eine bestimmte Verweilzeit gehalten wird, sondern das Temperatur-Zeitprofil, welches im zweiten Schritt durchlaufen wird. Wenn im Folgenden kein Temperatur-Zeitprofil angegeben wird, so ist mit der Temperatur jedoch die maximale Temperatur gemeint, die über eine bestimmte Verweilzeit gehalten wird. Temperatur und Verweilzeit werden im Folgenden gemeinsam auch als Prozessbedingungen bezeichnet.

Das vorliegende Verfahren bietet gegenüber dem Stand der Technik den Vorteil, dass die Bildung der gewünschten feinteiligen Partikel nicht bereits im ersten Schritt abgeschlossen ist, sondern erst während der hydrothermalen Behandlung im zweiten Schritt Bedingungen herbeigeführt werden, die zur Bildung des partikelförmigen Kohlenstoffmaterials mit entsprechender STSA-Oberfläche und OAN-Wert führen. Erst durch eine solche Verfahrensführung wird es möglich, gleichzeitig eine Partikelbildung und eine Reaktion herbeizuführen, welche im Ergebnis zu einem partikelförmigen Kohlenstoffmaterial führt, welches sich zum Beispiel auch hinsichtlich seines Kohlenstoffanteils oder seiner Beständigkeit gegenüber Basen von dem eingesetzten nachwachsenden Rohstoff unterscheidet.

Das vorliegende Verfahren hat dabei insbesondere den Vorteil, dass durch die bevorzugte Einstellung und gegenseitige Abstimmung

- der Konzentration der organischen Trockenmasse des nachwachsenden Rohstoffes in der den nachwachsenden Rohstoff enthaltenden Flüssigkeit,
- des pH-Wert der den nachwachsenden Rohstoff enthaltenden Flüssigkeit,
- der Konzentration an anorganischen Ionen in der den nachwachsenden Rohstoff enthaltenden Flüssigkeit,
- der Temperatur der hydrothermalen Behandlung und
- der Verweilzeit in der hydrothermalen Behandlung

die Polymerisation des nachwachsenden Rohstoffes im zweiten Schritt weitgehend unterdrückt bzw. so weit begrenzt wird, dass ein partikelförmiger Kohlenstoff mit entsprechender STSA-Oberfläche und OAN-Wert erhalten wird, und über die Korngrößenverteilung, d.h. die Größenverteilung der Agglomerate bzw. der unter bestimmten Bedingungen separiert vorliegenden Teilchen hinaus direkt auf die Größe der Primärteilchen Einfluss genommen werden kann, welche durch die STSA-Oberfläche erfasst wird. Darüber hinaus wird der Aufbau von Porosität im Material unterdrückt, was durch eine geringen Unterschied zwischen STSA-Oberfläche und BET-Oberfläche des partikelförmigen Kohlenstoffmaterials deutlich wird.

Bevorzugt wird zur Einstellung und gegenseitige Abstimmung

- der Konzentration der organischen Trockenmasse des nachwachsenden Rohstoffes in der den nachwachsenden Rohstoff enthaltenden Flüssigkeit,
- des pH-Wert der den nachwachsenden Rohstoff enthaltenden Flüssigkeit,
- der Konzentration an anorganischen Ionen in der den nachwachsenden Rohstoff enthaltenden Flüssigkeit,
- der Temperatur der hydrothermalen Behandlung und
- der Verweilzeit in der hydrothermalen Behandlung

eine oder mehrere der folgenden Messgrößen herangezogen:

- spezifische Dichte der den nachwachsenden Rohstoff enthaltenden Flüssigkeit nach dem zweiten Schritt;
- Leitfähigkeit der den nachwachsenden Rohstoff enthaltenden Flüssigkeit nach dem zweiten Schritt;
- pH-Wert der den nachwachsenden Rohstoff enthaltenden Flüssigkeit nach dem zweiten Schritt;
- Differenz des pH-Wertes der den nachwachsenden Rohstoff enthaltenden Flüssigkeit vor und nach dem zweiten Schritt;
- Differenz der Leitwerte der den nachwachsenden Rohstoff enthaltenden Flüssigkeit vor und nach dem zweiten Schritt;

Vorteilhaft werden die STSA-Oberfläche und der OAN-Wert des im vierten Schritt erhaltenen partikelförmigen Kohlenstoffmaterials durch die Einstellung

- der Konzentration der organischen Trockenmasse des nachwachsenden Rohstoffes in der den nachwachsenden Rohstoff enthaltenden Flüssigkeit bevorzugt auf einen Wert zwischen 5 Ma.-% und 40 Ma.-%, weiter bevorzugt zwischen 10 Ma.-% und 20 Ma.-%,
- des pH-Wert der den nachwachsenden Rohstoff enthaltenden Flüssigkeit bei 20°C bis 25°C bevorzugt auf einen Wert ≥7, weiter bevorzugt ≥8, insbesondere bevorzugt ≥ 8,5, weiter bevorzugt ≤ 11,
- der Konzentration an anorganischen Ionen in der den nachwachsenden Rohstoff enthaltenden Flüssigkeit bevorzugt auf einen Wert zwischen 10 mS/cm und 200 mS/cm, bevorzugt zwischen 10 und 150 mS/cm, weiterhin bevorzugt zwischen 10 und 50 mS/cm, darüber hinaus bevorzugt zwischen 10 und 40 mS/cm, insbesondere bevorzugt zwischen 10 mS/cm und 25 mS/cm (ermittelt als Leitwert der Messsonde des PCE-PHD1 bei 20°C bis 25°C),
- der Temperatur der hydrothermalen Behandlung bevorzugt auf einen maximalen Wert zwischen 200°C und 250°C, bevorzugt auf einen maximalen Wert zwischen 210 und 245°C und/oder
- der Verweilzeit in der hydrothermalen Behandlung bevorzugt auf eine Dauer zwischen 1 Minute und 6 Stunden, bevorzugt zwischen 30 Minuten und 4

Stunden, insbesondere bevorzugt zwischen 1 Stunde und 3 Stunden kontrolliert und so eine STSA-Oberfläche zwischen 5 $m^2/g$ und 200 $m^2/g$ und ein OAN-Wert zwischen 50 ml/100g und 150ml/100g eingestellt.

Vorteilhaft ist der nachwachsende Rohstoff im ersten Schritt vollständig in der den nachwachsenden Rohstoff beinhaltenden Flüssigkeit gelöst. Alternativ ist der nachwachsende Rohstoff im ersten Schritt nicht vollständig in der den nachwachsenden Rohstoff beinhaltenden Flüssigkeit gelöst, wobei jedoch

- die Konzentration der organischen Trockenmasse des nachwachsenden Rohstoffes in der den nachwachsenden Rohstoff enthaltenden Flüssigkeit,
- der pH-Wert der den nachwachsenden Rohstoff enthaltenden Flüssigkeit und
- die Konzentration an anorganischen Ionen in der den nachwachsenden Rohstoff enthaltenden Flüssigkeit

so eingestellt werden, dass sich der nachwachsende Rohstoff aufgrund der Temperaturerhöhung während der hydrothermalen Behandlung im zweiten Schritt zunächst vollständig löst, bevor der im dritten Schritt abtrennbare Feststoff im zweiten Schritt gebildet wird.

Vorteil der kompletten Lösung des nachwachsenden Rohstoffes in der den nachwachsenden Rohstoff beinhaltenden Flüssigkeit ist, dass ein Feststoff - Feststoff-Übergang unterdrückt wird und der im dritten Schritt abtrennbare Feststoff vollständig aus der Lösung gebildet wird, also ein Übergang von der Lösung zum Feststoff stattfindet.

Vorteilhaft wird das Verfahren kontinuierlich betrieben, wobei die Prozessbedingungen der hydrothermalen Behandlung im zweiten Schritt konstant gehalten werden und eine kontinuierliche Einstellung des pH-Wertes und des Leitwertes der den nachwachsenden Rohstoff enthaltenen Flüssigkeit im ersten Schritt erfolgt, um Schwankungen in der Qualität des nachwachsenden Rohstoffes zu kompensieren.

Dieses Vorgehen hat den Vorteil, dass die wesentlich aufwändigere Einstellung der Prozessbedingungen im zweiten Schritt vermieden werden kann.

In einer besonderen Variante des Verfahrens wird die Temperatur und die Verweilzeit im zweiten Schritt so eingestellt, dass zur Erreichung einer STSA-Oberfläche zwischen 5 $m^2/g$ und 200 $m^2/g$ und eines OAN-Werts zwischen 50 ml/100g und 150 ml/100g

- eine leicht höhere Konzentration an anorganischen Ionen erforderlich ist, als sich nach der Einstellung des organischen Trockenstoffgehaltes des nachwachsenden Rohstoffs in der diesen enthaltenen Flüssigkeit und der Einstellung des pH-Wertes zunächst ergibt und
- anschließend eine weitere Erhöhung der Konzentration an anorganischen Ionen durch Zugabe von Salzen vorgenommen werden kann bis die zu den Prozessbedingungen der zweiten Stufe passende Konzentration an anorganischen Ionen, gemessen über den Leitwert, erreicht ist.

Dieses Vorgehen hat den Vorteil, dass der Leitwert zur Feineinstellung der Qualität der den nachwachsenden Rohstoff enthaltenden Flüssigkeit genutzt werden kann, da dieser wesentlich einfacher und zuverlässiger gemessen werden kann als der pH-Wert.

Vorteilhaft erfolgt die Einstellung der Konzentration der organischen Trockenmasse des nachwachsenden Rohstoffes in der den nachwachsenden Rohstoff enthaltenden Flüssigkeit, des pH-Wertes der den nachwachsenden Rohstoff enthaltenden Flüssigkeit und/oder der Konzentration an anorganischen Ionen in der den nachwachsenden Rohstoff enthaltenden Flüssigkeit im ersten Schritt.

Alternativ vorteilhaft erfolgt die Einstellung der Konzentration der organischen Trockenmasse des nachwachsenden Rohstoffes in der den nachwachsenden Rohstoff enthaltenden Flüssigkeit, des pH-Wertes der den nachwachsenden Rohstoff enthaltenden Flüssigkeit und/oder der Konzentration an anorganischen Ionen in der den nachwachsenden Rohstoff enthaltenden Flüssigkeit im ersten Schritt und im zweiten Schritt.

Alternativ vorteilhaft erfolgt die Einstellung der Konzentration der organischen Trockenmasse des nachwachsenden Rohstoffes in der den nachwachsenden Rohstoff enthaltenden Flüssigkeit, des pH-Wertes der den nachwachsenden Rohstoff enthaltenden Flüssigkeit und/oder der Konzentration an anorganischen Ionen in der den nachwachsenden Rohstoff enthaltenden Flüssigkeit im zweiten Schritt.

In den Ausführungsformen, in denen die Einstellung der Konzentration der organischen Trockenmasse des nachwachsenden Rohstoffes in der den nachwachsenden Rohstoff enthaltenden Flüssigkeit, des pH-Wertes der den nachwachsenden Rohstoff enthaltenden Flüssigkeit und/oder der Konzentration an anorganischen Ionen in der den nachwachsenden Rohstoff enthaltenden Flüssigkeit auch im zweiten Schritt erfolgt, ist vorteilhaft der nachwachsende Rohstoff in der den nachwachsenden Rohstoff enthaltenden Flüssigkeit im ersten Schritt vollständig gelöst und die Bildung der gewünschten feinteiligen Partikel wird während der hydrothermale Behandlung im zweiten Schritt nicht nur durch die gewählten Prozessbedingungen sondern zusätzlich durch eine Erhöhung der Konzentration der organischen Trockenmasse des nachwachsenden Rohstoffes in der den nachwachsenden Rohstoff enthaltenden Flüssigkeit, eine Absenkung des pH-Wertes der den nachwachsenden Rohstoff enthaltenden Flüssigkeit oder einer Erhöhung der Konzentration an anorganischen Ionen in der den nachwachsenden Rohstoff enthaltenden Flüssigkeit herbeigeführt.

Vorteil einer solchen Verfahrensführung ist, dass die Bedingungen, die zur Bildung der gewünschten feinteiligen Partikel führen, im zweiten Schritt gezielt herbeigeführt werden können und dadurch die Stabilität des Verfahrens erhöht und ggf. die Verweilzeit im zweiten Schritt reduziert werden kann.

Darüber hinaus wird vorteilhaft nach Abschluss der Bildung der gewünschten feinteiligen Partikel im zweiten Schritt eine Absenkung der Konzentration der organischen Trockenmasse in der das partikelförmige Kohlenstoffmaterial enthaltenden Flüssigkeit, eine Erhöhung des pH-Wertes der das partikelförmige Kohlenstoffmaterial enthaltenden Flüssigkeit oder einer Absenkung der Konzentration an anorganischen Ionen in der das partikelförmige Kohlenstoffmaterial enthaltenden Flüssigkeit herbeigeführt. Dies erfolgt vorteilhaft bereits im zweiten Schritt oder spätestens im dritten Schritt.

Durch diese Verfahrensführung wird sichergestellt, dass nach Abschluss der Bildung des gewünschten feinteiligen Materials kein weiterer Feststoff zum Beispiel während der Abkühlungsphase am Ende des zweiten Schrittes oder durch eine Erhöhung der Konzentration der organischen Trockenmasse in der das partikelförmige Kohlenstoffmaterial enthaltenden Flüssigkeit zum Beispiel durch Verdunstung im dritten Schritt gebildet wird.

Während der hydrothermalen Behandlung entspricht der Druck mindestens dem Sattdampfdruck der den nachwachsenden Rohstoff beinhaltenden Flüssigkeit.

In einer bevorzugten Ausführungsform liegt

- die Konzentration an organischer Trockenmasse einer Lignin beinhaltenden Flüssigkeit im ersten Schritt zwischen 10 Ma.-% und 20 Ma.%,
- der pH-Wert der Lignin beinhaltenden Flüssigkeit im ersten Schritt bei mehr als 8,5 beträgt und weniger als 10,5,
- die Konzentration der anorganischen Ionen der Lignin beinhaltende Flüssigkeit im ersten Schritt so, dass die Leitfähigkeit zwischen 10 mS/cm und 25 mS/cm liegt,
- die maximale Temperatur der hydrothermalen Behandlung im zweiten Schritt zwischen 210 °C und 240 °C und
- die Verweilzeit der Lignin beinhaltenden Flüssigkeit in der hydrothermalen Behandlung im zweiten Schritt zwischen 120 und 240 Minuten wodurch
- die nach einer Entwässerung im dritten Schritt und einer Trocknung im vierten Schritt gemessene STSA-Oberfläche des so erzeugten partikelförmigen Kohlenstoffmaterials einen Wert zwischen 5 m$^2$/g und 50 m$^2$/g und einen OAN-Wert zwischen 50 ml/100g und 100 ml/100g aufweist.

Das hierin offenbarte Verfahren kann weiterhin eine Wäsche im Anschluss an die Entwässerung im dritten Schritt oder eine Pulverisierung im Anschluss an die Trocknung im vierten Schritt beinhalten.

Die Trocknung im vierten Schritt wird bevorzugt bei Temperaturen unterhalb des Erweichungspunktes des partikelförmigen Kohlenstoffmaterials, bevorzugt bei Temperaturen unterhalb von 150°C weiter bevorzugt bei Temperaturen unterhalb von 130 °C durchgeführt.

Vorteilhaft wird der D90 der Q3 Verteilung der Korngröße des partikelförmigen Kohlenstoffmaterial nach der Trocknung im vierten Schritt durch eine Pulverisierung auf einen Wert kleiner 30 μm, bevorzugt kleiner 20 μm, weiter bevorzugt kleiner 15 μm besonders bevorzugt kleiner 10 μm eingestellt.

Das Verfahren kommt dabei insbesondere ohne die Zugabe einer co-polymerisierbaren Verbindung oder eines Polymerisationsinitiators sowie ohne eine Fermentation der Biomasse aus.

Das Verfahren arbeitet in flüssiger Phase, wobei immer unterhalb des kritischen Punktes von Wasser gearbeitet wird.

Die vorliegende Erfindung wird nachfolgend anhand von Ausführungsbeispielen näher erläutert. Es zeigt:

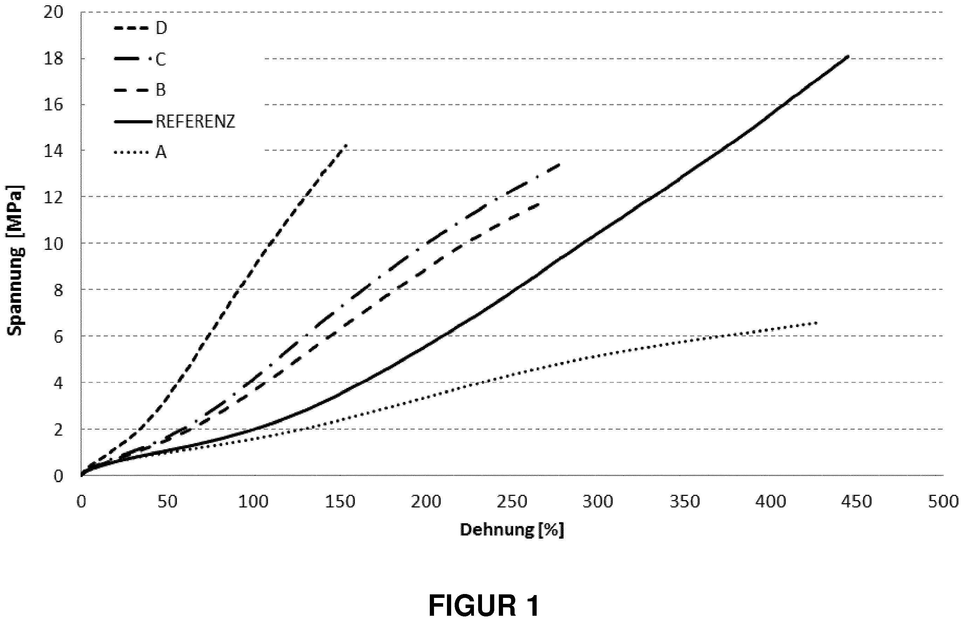

Figur 1    ein Diagramm zum Spannungs-Dehnungsverlauf im Zugversuch als Beispiel für die gummitechnischen Kennwerte von vernetzten Kautschukartikeln aus SBR mit dem erfindungsgemäßen partikelförmigen Kohlenstoffmaterial und von der zugehörigen Referenz.

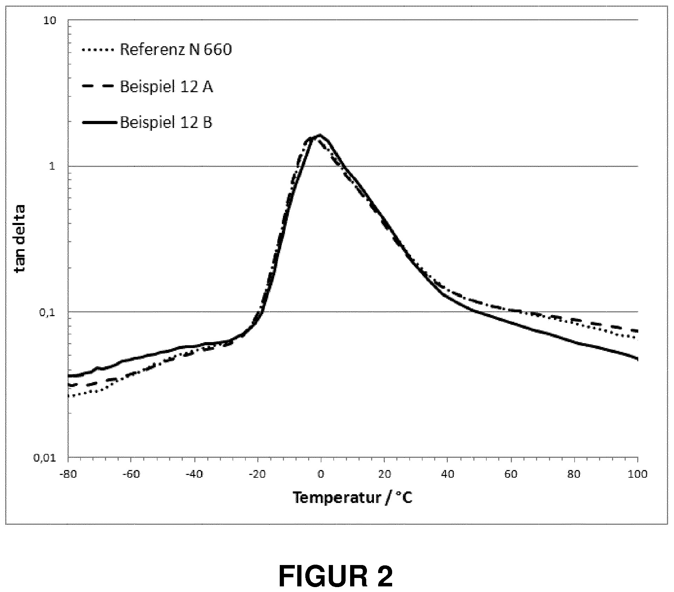

Figur 2    ein Diagramm zu den Kurven des Verlustfaktors tan delta (logarithmische Skalierung) in Abhängigkeit von der Temperatur an fertig vernetzten Artikeln aus SBR mit dem erfindungsgemäßen partikelförmigen Kohlenstoffmaterial beziehungsweise an der Referenz mit N 660

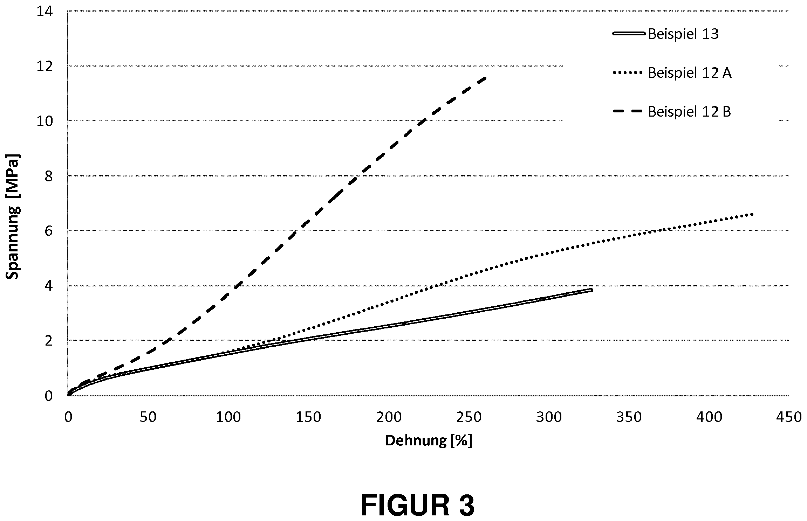

Figur 3    ein Diagramm zum Spannungs-Dehnungsverlauf im Zugversuch als Vergleich der gummitechnischen Kennwerte von vernetzten Kautschukartikeln aus SBR, die mit unbehandeltem Lignin, mit dem erfindungsgemäßen partikelförmigen Kohlenstoffmaterial aber ohne Kopplungsreagenz und mit dem erfindungsgemäßen partikelförmigen Kohlenstoffmaterial und Kopplungsreagenz versehen sind.

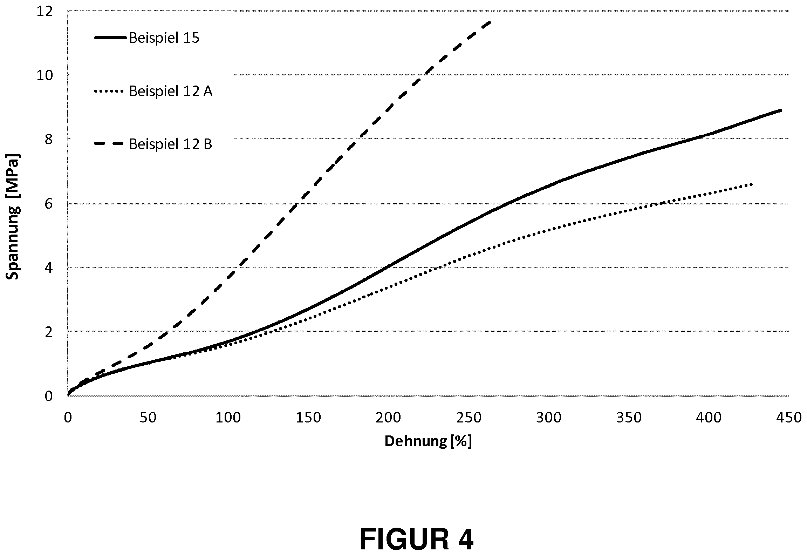

Figur 4    ein Diagramm zum Spannungs-Dehnungsverlauf im Zugversuch als Vergleich der gummitechnischen Kennwerte von vernetzten Kautschukartikeln aus SBR, die mit dem erfindungsgemäßen partikelförmigen Kohlenstoffmaterial aber ohne weiteres Additiv, mit dem erfindungsgemäßen partikelförmigen Kohlenstoffmaterial und einem Reagenz zur Maskierung der funktionellen Gruppen sowie mit dem erfindungsgemäßen partikelförmigen Kohlenstoffmaterial und einem Kopplungsreagenz versehen sind.

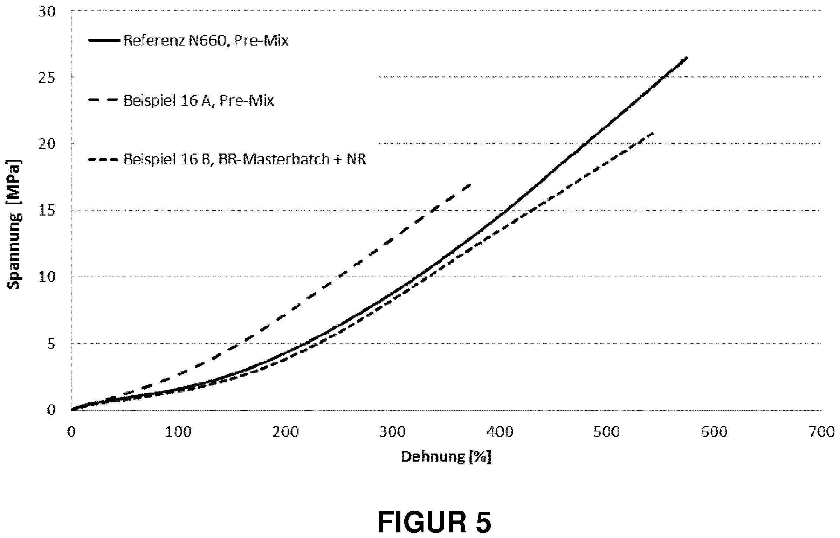

Figur 5    ein Diagramm zum Spannungs-Dehnungsverlauf im Zugversuch als Vergleich der gummitechnischen Kennwerte von Artikeln aus Elastomerwerkstoff-Mischungen basierend auf Naturkautschuk und Butadienkautschuk NR/BR und dem partikelförmigen Kohlenstoffmaterial jeweils mit unterschiedlichen Mischungsprozeduren sowie von der Referenz.

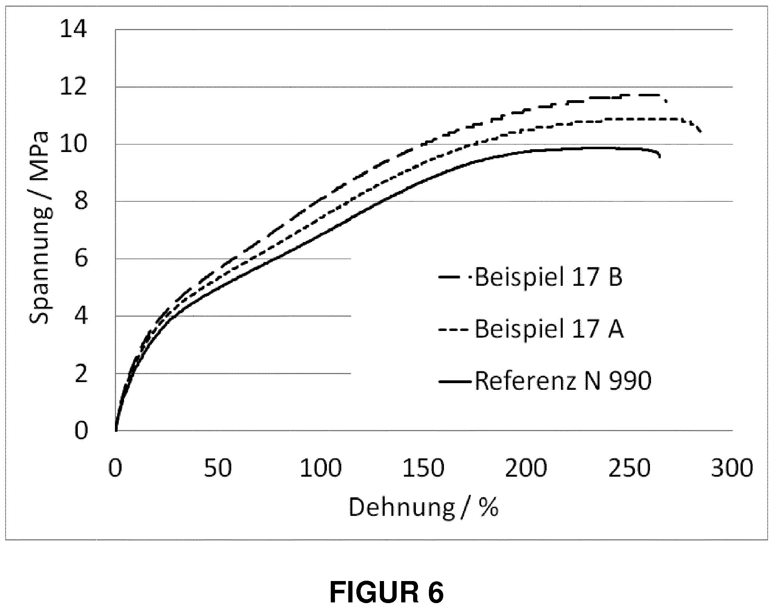

Figur 6    ein Diagramm zum Spannungs-Dehnungsverlauf im Zugversuch als Vergleich der gummitechnischen Kennwerte von vernetzten Kautschukartikeln aus NBR, die mit dem erfindungsgemäßen partikelförmigen Kohlenstoffmaterial ohne Kopplungsreagenz versehen sind und von der Referenz.

In den Ausführungsbeispielen wird das hierin offenbarte Verfahren zur Gewinnung des erfindungsgemäßen partikelförmigen Kohlenstoffmaterials, dessen Eigenschaften und seine Leistung im vernetzten Kautschuk beschrieben.

Beispiele 1-11 zur Herstellung des partikelförmigen Kohlenstoffmaterials aus Lignin

Im ersten Schritt wird eine den nachwachsenden Rohstoff enthaltende Flüssigkeit bereitgestellt.

Zunächst werden Wasser (1) und Lignin (2) gemischt und eine ligninhaltige Flüssigkeit mit einem eingestellten Gehalt an organischer Trockenmasse (3) bereitet.

Das Lignin wird anschließend in der ligninhaltigen Flüssigkeit vollständig gelöst. Hierzu wird der pH-Wert durch Zugabe einer Base oder einer Säure (6) auf den gewünschten Wert eingestellt (7). Die Herstellung der Lösung wird durch intensives Durchmischen bei einer geeigneten Temperatur (4) über ausreichende Zeit (5) unterstützt. Durch die zugesetzte Base oder Säure und durch Salze, welche zusätzlich zugesetzt werden (8) und/oder auch aus dem Ascheanteil des Lignins stammen, wird eine bestimmte Konzentration an anorganischen Ionen eingestellt, die als Leitfähigkeit (9) messbar ist. Die Zusammensetzung und Eigenschaften der so hergestellten ligninhaltigen Flüssigkeit ist in Tabelle 1 angeführt,

Tabelle 1

| Beispiel | 1 | | 2 | | 3 | 4 | 5 | 6 | | | 7 | 8 | | 9 |
|---|---|---|---|---|---|---|---|---|---|---|---|---|---|---|
| - | ml | Art | Art | g | % | °C | h | Add itiv | g | - | Additiv | g | mS/cm |
| 1 | 10200 | destilliertes Wasser | Lignin 1 | 1800 | 14,1 | 80 | 2 | NaOH | 107,25 | 10,1 | - | 0,0 | 15,1 |
| 2 | 10200 | destilliertes Wasser | Lignin 1 | 1800 | 14,1 | 80 | 2 | NaOH | 128,40 | 10,3 | - | 0,0 | 17,5 |
| 3 | 10200 | destilliertes Wasser | Lignin 2 | 1800 | 14,2 | 80 | 2 | NaOH | 111,60 | 10,2 | - | 0,0 | 18,1 |
| 4 | 10200 | destilliertes Wasser | Lignin 2 | 1800 | 14,2 | 80 | 2 | NaOH | 111,60 | 10,2 | - | 0,0 | 20,1 |
| 6 | 3854 | Leitungswasser Ludwigsfelde | Lignin 3 | 1092 | 14,8 | 80 | 2 | NaOH | 54,00 | 9,6 | - | 0,0 | 15,9 |
| 7 | 3854 | Leitungswasser Ludwigsfelde | Lignin 3 | 1092 | 14,8 | 80 | 2 | NaOH | 54,00 | 9,6 | - | 0.0 | 15,9 |
| 8 | 3854 | Leitungswasser Ludwigsfelde | Lignin 3 | 1092 | 14,8 | 80 | 2 | NaOH | 54,00 | 9,6 | - | 0,0 | 15,9 |
| 9 | 3854 | Leitungswasser Ludwigsfelde | Lignin 3 | 1092 | 14,8 | 80 | 2 | NaOH | 54,00 | 9,6 | - | 0,0 | 15,9 |
| 10 | 3854 | Leitungswasser Ludwigsfelde | Lignin 3 | 1092 | 14,8 | 80 | 2 | NaOH | 54,00 | 9,6 | - | 0,0 | 15,9 |
| 11 | 48,23 | destilliertes Wasser | Lignin 1 | 20,9 | 14,1 | 80 | 2 | NaOH | 0,44 | 9,8 | - | 0,0 | 17,7 |

Die Zusammensetzung des genutzten Lignins ist in Tabelle 2 angeführt.

Tabelle 2

|  | **Lignin 1** | **Lignin 2** | **Lignin 3** |
|---|---|---|---|
| C | 62,8 | 64,0 | 67,2 |
| H | 4,8 | 5,2 | 5,5 |
| O (rechnerisch) | 24,8 | 24,0 | 24,0 |
| N | 0,3 | 0,0 | 0,0 |
| S | 1,3 | 1,5 | 1,8 |
| Na | 2,5 | 1,9 | 0,3 |
| Asche (ohne Na) | 3,6 | 4,1 | 1,2 |

Im zweiten Schritt wird die den nachwachsenden Rohstoff enthaltende Flüssigkeit einer hydrothermalen Behandlung unterzogen und so ein Feststoff erhalten.

Die im ersten Schritt hergestellte Lösung wird von einer Starttemperatur (10) über eine Aufheizzeit (11) auf eine Reaktionstemperatur (12) aufgeheizt, welche über eine Reaktionsdauer (13) gehalten wird. Anschließend erfolgt eine Abkühlung über eine Abkühlzeit (14) auf eine Endtemperatur (15). Im Ergebnis wird ein Feststoff erhalten. In Abhängigkeit von den vorgenannten Prozessbedingungen verändern sich der pH-Wert (16) und die Leitfähigkeit (17) der den Feststoff beinhaltenden Flüssigkeit.

Bei passendender Einstellung des Gehalts an organischer Trockenmasse, des pH-Wertes und der Konzentration an anorganischen Ionen im ersten Schritt und passender Wahl der Prozessbedingungen im zweiten Schritt stellen sich im zweiten Schritt Bedingungen ein, bei denen sich das partikelförmige Kohlenstoffmaterial in einer rohen Form aus der Lösung abscheidet. Die Verfahrensbedingungen des zweiten Schrittes sind in Tabelle 3 angeführt.

Tabelle 3

| Beispiel | 10 | 11 | 12 | 13 | 14 | 15 | 16 | 17 |
|---|---|---|---|---|---|---|---|---|
| - | °C | min | °C | min | min | °C | - | mS/cm |
| 1 | 80 | 90 | 240 | 150 | 3600 | 80 | 9,0 | 19,7 |
| 2 | 80 | 90 | 240 | 150 | 3600 | 80 | 9,1 | 21,4 |
| 3 | 80 | 90 | 240 | 150 | 3600 | 80 | 8,6 | 20,2 |
| 4 | 80 | 90 | 240 | 150 | 3600 | 80 | 8,4 | 21,1 |
| 6 | 30 | 40 | 225 | 324 | 40 | 30 | 8,4 | 13,2 |
| 7 | 30 | 40 | 225 | 408 | 40 | 30 | 8,3 | 13,5 |
| 8 | 30 | 41 | 230 | 270 | 41 | 30 | 8,3 | 13,5 |
| 9 | 30 | 41 | 230 | 300 | 41 | 30 | 8,2 | 13,7 |
| 10 | 30 | 42 | 235 | 162 | 42 | 30 | 8,7 | 12,9 |
| 11 | 30 | 41 | 230 | 180 | 41 | 30 | 8,6 | 20,9 |

Im dritten Schritt wird die das rohe partikelförmige Kohlenstoffmaterial entwässert und ggf. gewaschen. Das rohe partikelförmige Kohlenstoffmaterial wird von der es beinhaltenden Flüssigkeit durch eine Entwässerung (18) weitgehend abgetrennt. Anschließend wird das rohe partikelförmige Kohlenstoffmaterial mit einem Vielfachen an Masse Wasser gewaschen und erneut entwässert (19). Die Verfahrensbedingungen des dritten Schritts sind in Tabelle 4 zusammengefasst.

Tabelle 4

| Beispiel | 18 | 19 | | |
|---|---|---|---|---|
| - | Art | Typ | Waschflüssigkeit | Waschflüssigkeitsmenge kg/kg trockenes partikelförmiges Kohlenstoffmaterial |
| 1 | Zentrifuge; 6000 UPM / 15 min | Resuspension / Zentrifuge; 6000 UPM / 15 min | destilliertes Wasser | 3 |
| 2 | Zentrifuge; 6000 UPM / 15 min | Resuspension / Zentrifuge; 6000 UPM / 15 min | destilliertes Wasser | 3 |
| 3 | Zentrifuge; 6000 UPM / 15 min | Resuspension / Zentrifuge; 6000 UPM / 15 min | destilliertes Wasser | 3 |
| 4 | Zentrifuge; 6000 UPM / 15 min | Resuspension / Zentrifuge; 6000 UPM / 15 min | destilliertes Wasser | 3 |
| 6 | Zentrifuge; 9000 UPM / 15 min | Resuspension / Zentrifuge; 9000 UPM / 15 min | Leitungswasser Ludwigsfelde | 2 |
| 7 | Zentrifuge; 9000 UPM / 15 min | Resuspension / Zentrifuge; 9000 UPM / 15 min | Leitungswasser Ludwigsfelde | 2 |
| 8 | Zentrifuge; 9000 UPM / 15 min | Resuspension / Zentrifuge; 9000 UPM / 15 min | Leitungswasser Ludwigsfelde | 2 |
| 9 | Zentrifuge; 9000 UPM / 15 min | Resuspension / Zentrifuge; 9000 UPM / 15 min | Leitungswasser Ludwigsfelde | 2 |
| 10 | Zentrifuge; 9000 UPM / 15 min | Resuspension / Zentrifuge; 9000 UPM / 15 min | Leitungswasser Ludwigsfelde | 2 |
| 11 | Zentrifuge; 9000 UPM / 15 min | Resuspension / Zentrifuge; 9000 UPM / 15 min | destilliertes Wasser | 2 |

Im vierten Schritt wird die das entwässerte und ggf. gewaschene rohe partikelförmige Kohlenstoffmaterial getrocknet und ggf. gemahlen.

Das entwässerte rohe partikelförmige Kohlenstoffmaterial und verbleibende Flüssigkeit wird bei erhöhter Temperatur (20, siehe Tabelle 5) getrocknet, wodurch das partikelförmige Kohlenstoffmaterial erhalten wird. Anschließend kann das partikelförmige Kohlenstoffmaterial de-agglomeriert werden (21, siehe Tabelle 5).

Tabelle 5

| Beispiel | 20 | 21 |
|---|---|---|
| - | °C | - |
| 1 | 105 | Strahlmühle mit Sichterrad |
| 2 | 105 | Strahlmühle mit Sichterrad |
| 3 | 105 | Strahlmühle mit Sichterrad |
| 4 | 105 | Strahlmühle mit Sichterrad |
| 6 | 105 | - |

(fortgesetzt)

| Beispiel | 20 | 21 |
|---|---|---|
| - | °C | - |
| 7 | 105 | - |
| 8 | 1 05 | - |
| 9 | 105 | - |
| 10 | 105 | - |
| 11 | 105 | - |

Qualität des erhaltenen partikelförmigen Kohlenstoffmaterials aus den Beispielen 1-11: Im Ergebnis wird eine Ausprägung des erfindungsgemäßen partikelförmigen Kohlenstoffmaterials erhalten (siehe Tabelle 6):

Tabelle 6

| Beispiel | Kohlenstoff Ma.-% trocken, aschefrei | Sauerstoff Ma.-% trocken, aschefrei | Aschegehlat Ma.-% trocken | STSA m²/g | OAN-Wert ml/100g | pH)1 - | BB)2 % | D/G)3 - | D90)4 µm | D90)4 µm | D99)4 µm | durchschnittlicher Kugeldurchmesser)6 µm | D50 / durchschnittlichem Kugeldurchmesser - | BET m²/g | Wassergehalt % |
|---|---|---|---|---|---|---|---|---|---|---|---|---|---|---|---|
| 1 | 72,3 | 21,7 | 4,9 | 17,7 | 94,4 | 8,7 | 9,8 | 0,52 | 1,6 | 3,1 | 4,4 | 0,23 | 7,0 | 19,9 | 0,8 |
| 2 | 71,9 | 22,3 | 4,6 | 12,6 | 80,5 | 8,5 | 9,5 | 0,65 | 1,5 | 2,8 | 4,0 | 0,32 | 4,7 | 14,2 | 1,9 |
| 3 | 70,9 | 22,8 | 5,3 | 13,6 | 84,1 | 8,8 | n.b. | n.b. | 1,4 | 2,4 | 3,2 | 0,29 | 4,7 | 14,4 | 1,3 |
| 4 | 70,7 | 22,8 | 5,3 | 10,8 | 74,0 | 8,8 | n.b. | n.b. | 1,5 | 2,6 | 3,3 | 0,37 | 4,1 | 10,0 | 1,5 |
| 6 | 69,5 | n.b. | n.b. | 26,9 | n.b | n.b | n.b | n.b | n.b | n.b | n.b | 0,15 | n.b | 28,3 | 1,5 |
| 7 | 69,8 | n.b. | n.b. | 19,2 | n.b | n.b | n.b | n.b | n.b | n.b | n.b | 0,21 | n.b | 20,2 | 2,4 |
| 8 | 70,1 | n.b. | n.b. | 14,0 | n.b | n.b | n.b | n.b | n.b | eb | n.b | 0,29 | n.b | 14,7 | 1,3 |
| 9 | 70,2 | n.b. | n.b. | 9,9 | n.b | n.b | n.b | n.b | n.b | n.b | n.b | 0,40 | n.b | 10,4 | 1,6 |
| 10 | 70,4 | n.b. | n.b. | 2,6 | n.b | n.b | n.b | n.b | n.b | n.b | n.b | 1,56 | n.b | 2,7 | 2 |
| 11 | 70,3 | n.b. | n.b. | 36,7 | n.b | n.b | n.b | n.b | n.b | n.b | n.b | 0,11 | n.b | 38,6 | 1,3 |

1 = in 15 %iger Suspension; 2 = Beständigkeit gegenüber Basen in % des gelösten Materials,

3 = aus dem Ramanspektrum; 4 = aus der Korngrößenbestimmung mittels Laserbeugung

5 = berechnet aus STSA und Teilchendichte; n.b.: nicht bestimmt

Beispiele 12 A - D und Referenzbeispiel für die Herstellung von Kautschukartikeln aus SBR mit dem partikelförmigen Kohlenstoffmaterial aus den Beispielen 1 und 2 bzw. mit Ruß N 660

Die gemäß der Ausführungsbeispiele 1 und 2 gewonnen Kohlenstoffmaterialien werden als Füllstoff in eine Gummimischung eingebracht und unter Zuhilfenahme weiterer Additive vulkanisiert. Die Zusammensetzung der Gummimischung ist in Tabelle 7 dargestellt.

Tabelle 7

| | Referenz | A | B | C | D | |
|---|---|---|---|---|---|---|
| Elastomer Typ | sSBR | sSBR | sSBR | sSBR | sSBR | - |
| Elastomer Menge | 100 | 100 | 100 | 100 | 100 | phr |
| Füllstoff Typ | N660 | partikelförmiges Kohlenstoffmaterial nach Beispiel 2 | partikelförmiges Kohlenstoffmaterial nach Beispiel 2 | partikelförmiges Kohlenstoffmaterial nach Beispiel 1 | partikelförmiges Kohlenstoffmaterial nach Beispiel 2 | - |
| Füllstoff Menge | 40 | 40 | 40 | 40 | 60 | phr |
| Kopplungsreagenz Typ | - | - | Si69 | Si69 | Si69 | - |
| Kopplungsreagenz Menge | - | - | 3,2 | 3,2 | 4,8 | phr |
| ZnO | 3 | 3 | 3 | 3 | 3 | phr |
| Stearinsäure | 2 | 2 | 2 | 2 | 2 | phr |
| DPG | 2 | 2 | 2 | 2 | 2 | phr |
| CBS | 1,5 | 1,5 | 1,5 | 1,5 | 1,5 | phr |
| Schwefel | 1,5 | 1,5 | 1,5 | 1,5 | 1,5 | phr |

phr: parts per hundred rubber, Menge bezogen auf Elastomermenge
DPG, CBS: Vulkanisierungsbeschleuniger
Si69: Kopplungsreagenz

EP 3 377 585 B1

Als SBR wurde Lösungs-SBR (sSBR) Buna VSL 4526-0 HM von Lanxess eingesetzt. Es ist ein Copolymer aus 26 Masse-% Styren neben Butadien. Seine Mooney Viskosität beträgt 65 ME (ASTM D 1646). Zinkoxid, Stearinsäure und Schwefel stammten von Fischer Scientific. 2-N-Cyclohexyl Benzothiazolsulfenamid (CBS) stammte von Lanxess. 1,3-Diphenylguanidin (DPG) wurde von Sigma-Aldrich Co. LLC, USA verwendet. Das Prozessöl TDAE (VIVATEC 500) war von Klaus Dahleke KG. Das Antioxidans 2,2,4-Trimethyl-1,2-dihydrochinolin-Polymer TMQ wurde von C.H.Erbslöh, Krefeld, geliefert. N-(1,3-dimethylbutyl)-N'-phenyl-P-phenylendiamin (6PPD) wurde von aber Gmbh & Co. KG, Karlsruhe bezogen. Als Kopplungsreagenz wurde Bis(triethoxysilylpropyl)tetrasulfid eingesetzt, welches unter dem Namen Si69® von Evonik Industries vertrieben wird.

SBR wurde im Innenmischer (Haake Rheomix 600P, ThermoFisher Scientific, Karlsruhe) bei 145 C° und einem Füllfaktor 0.7, entsprechend 56 $cm^3$ Volumen, vorgelegt. Anschließend wurden die Füllstoffe in zwei Stufen zugefügt. Nach gegebenenfalls Zugabe des Silans Si69 wurde zur vollständigen Silanisierung die Temperatur im Innenmischer 10 min in einem Bereich zwischen 140-165°C gehalten und bei einer Drehzahl von 60 $min^{-1}$ gemischt.

Die Zugabe der Antioxidantien und Vulkanisationsadditive erfolgte auf einem Zwei-Walzen-Walzwerk (Polymix-110L, Servitec Maschinen Service GmbH, Wustermark) bei einer Ausgangstemperatur von 50°C und einer konstanten Friktion von 1:1.2.

Die Gummimischungen Referenz und A (Tabelle 7) werden unter Nutzung eines für die Anwendung von Ruß üblichen Vulkanisierungsprozesses vernetzt. Die Gummimischungen B, C und D (Tabelle 7) werden unter Nutzung eines für die Anwendung von Kieselsäure zusammen mit Si69 üblichen Vulkanisierungsprozesses vernetzt. Die Proben wurden in einer Laborpresse TP1000 (Fontijne Grotnes B.V., Vlaardingen Niederlande) bei 160 °C und einer Presskraft von 150 kN vulkanisiert. Die optimale Vulkanisationszeit $t_{90}$ wurde mittels eines Rubber Process Analyzers bestimmt (Scarabaeus SIS-V50, Scarabaeus GmbH, Wetzlar).

Die mechanische Charakterisierung wurde an DIN S2 Prüfkörpern nach DIN 53504 mit einer Zwick/Roell-Z010 Materialprüfmaschine (Zwick GmbH & Co KG, Ulm) mit optischem Dehnungssensor bei einer Traversengeschindigkeit von 200 mm/min bei Raumtemperatur vorgenommen. Die Spannungs-Dehnungs-Verläufe im Zugversuch als Beispiel für die gummitechnischen Eigenschaften der erhaltenen Kautschukartikel aus den Beispielen A - D der Tabelle 7 sind im Diagramm der Figur 1 angeführt.

Diese zeigen insbesondere im Falle der Beispiele B, C und D (in denen ein Kopplungsreagenz zugegeben wird) vergleichbare Eigenschaften wie der Füllstoff N660. So sind die Werte für den Modulus 50%, Modulus 100% und Modulus 200% der Beispiele B und C mindestens so hoch wie für die Referenz. Weiterhin wird gezeigt, dass die Erhöhung des Füllgrades von 40 phr (B) auf 60 phr (D) des partikelförmigen Kohlenstoffmaterials nach Beispiel 2 bei Dehnung im unteren Bereich (bis 100%) zu einer Erhöhung der Spannungswerte, also des Modulus 50% und des Modulus 100%, führt. Darüber hinaus wird deutlich, dass eine Erhöhung der STSA-Oberfläche und des OAN-Wertes des partikelförmigen Kohlenstoffmaterials von den Werten des Beispiels 2 auf die Werte des Beispiels 1 bei gleichem Füllgrad zu einer Verbesserung der Zugfestigkeit und zu höheren Werten des Modulus 50%, Modulus 100% und Modulus 200% führt (Vergleiche B und C). Weiterhin wird deutlich, dass bereits das partikelförmige Kohlenstoffmaterial aus Beispiel 2 mit seiner STSA-Oberfläche von 12,6 $m^2$/g einen vergleichbaren Spannungs-Dehnung-Verlauf im Zugversuch zeigt wie der klassische Ruß N660, welche durch eine STSA-Oberfläche von 34 $m^2$/g $\pm$ 5 $m^2$/g gekennzeichnet ist.

Der Verlustfaktor tan delta (Quotient aus Verlustmodul E'' und Speichermodul E' des Elastomerwerkstoffs) in Abhängigkeit von der Temperatur, bestimmt in einer dynamisch mechanischen Analyse *(temperature sweep),* ist in Figur 2 und Tabelle 8 dargestellt.

Die Mischungen mit N660 (Referenz) und die mit dem partikelförmigen Kohlenstoffmaterial aus Beispiel 2 ohne Kopplungsreagenz (Beispiel 12 A) zeigen ähnliche Glasübergangstemperaturen ($T_{g,SBR}$ = -2.91°C; siehe Peak der Kurve tan delta versus Temperatur in Figur 2). Diese beiden Mischungen weisen auch ähnliche Steifigkeit in der Gummi-Plateauregion oberhalb der Glasübergangstemperatur auf. Die tan delta-Kurven liegen nah beieinander, wobei allerdings die Kurve der Referenz-Mischung ab ca. 76 °C etwas tiefer als die von Beispiel 12 A liegt und somit auf einen etwas geringeren Energieverlust hinweist.

Die Verwendung des partikelförmigen Kohlenstoffmaterials aus Beispiel 2 in Kombination mit einem Kopplungsreagenz (Beispiel 12 B) führt zu nennenswerten Veränderungen. Im Vergleich zu Referenz und 12 A wird die Glasübergangstemperatur der Mischung aus Beispiel 12 B aufwärts verschoben auf $T_{g,SBR}$ = -0.48°C. Unter den Bedingungen schwacher dynamischer Dehnung (0.5%) werden die Energieverlusteigenschaften der Mischung 12 B deutlich gegenüber der Referenz mit N660 verbessert, was am tieferen Kurvenverlauf im Temperaturbereich oberhalb der Glasübergangstemperatur sichtbar wird.

Es wird erkennbar, dass der Elastomerwerkstoff, der das partikelförmige Kohlenstoffmaterial aus Beispiel 2 und ein Kopplungsreagenz enthält, gegenüber der Referenz mit N 660 für tan delta oberhalb der Glasübergangstemperatur niedrigere Werte aufweist, was eine vergleichsweise verringerte Rollreibung bei einem Reifen aus diesem Material erwarten lässt.

Tabelle 8

|  | tan delta 60°C | tan delta 0°C |
|---|---|---|
| Referenz N660 | 0,1020 | 1,4342 |
| Beispiel 12 A | 0,1035 | 1,4023 |
| Beispiel 12 B | 0,0840 | 1,6208 |

Es ist außerdem in Figur 2 ersichtlich, dass der tan delta von Beispiel 12 B bei 0°C höher ist als bei der Referenz, was einen verbesserten Nassgriff eines Reifen aus der Mischung von Beispiel 12B erwarten lässt.

Vergleichsbeispiel 13 für die Herstellung von Kautschukartikeln aus SBR mit unbehandeltem Lignin

Nach dem Stand der Technik wurde bereits unbehandeltes Lignin in Gummimischungen eingesetzt. Das folgende Vergleichsbeispiel zeigt die unterschiedliche Wirkung von unbehandeltem Lignin und von dem erfindungsgemäßen Kohlenstoffmaterial in einer Gummimischung.

Lignin 3 aus Tabelle 2 wird zu Vergleichszwecken als Füllstoff in eine Gummimischung eingebracht und unter Zuhilfenahme weiterer Additive vulkanisiert. Die Zusammensetzung der Gummimischung entspricht der Zusammensetzung in Beispiel 12 B wobei jedoch anstelle des partikelförmigen Kohlenstoffmaterials aus Beispiel 2 jetzt unbehandeltes Lignin 3 eingesetzt wird. Die Gummimischung für Beispiel 13 wird unter Nutzung eines für die Anwendung von Kieselsäure zusammen mit Si69 üblichen Vulkanisierungsprozesses vernetzt.

Der Spannungs-Dehnungs-Verlauf in einem Zugversuch als Beispiel für die gummitechnischen Eigenschaften des erhaltenen Kautschukartikels ist zusammen mit den Ergebnissen von Beispiel 12 A und 12 B im Diagramm der Figur 3 angeführt.

Es wird erkennbar, dass der Effekt in der Gummimischung hervorgerufen durch unbehandeltes Lignin (Beispiel 13) auch bei Nutzung des Kopplungsreagenzes Silan Si69 deutlich schwächer ist als der Effekt hervorgerufen durch das erfindungsgemäße Kohlenstoffmaterial an sich (Beispiel 12 A) und ganz besonders deutlich hinter dem Effekt des erfindungsgemäßen Kohlenstoffmaterials in Kombination mit Silan Si69 (Beispiel 12 B) zurückbleibt.

Beispiel 14 zur Bestimmung des $^{14}$C-Gehaltes am Produkt aus Beispiel 2

Das Material aus Beispiel 2 wurde zwecks Bestimmung des $^{14}$C-Gehalts an das Poznań Radiocarbon Laboratory, Foundation of the A. Mickiewicz University, ul. Rubież 46, 61-612 Poznań gegeben. Die verwendete Methode wird vom Leiter des Labors Tomasz Goslar auf der Internet-Präsenz des Instituts beschrieben. Die für Lignin wesentlichen Inhalte werden im Folgenden zusammengefasst.

Vorgehensweise zur $^{14}$C-Datierung mittels AMS-Technik mit den Schritten:

a) chemische Vorbehandlung
b) Produktion von $CO_2$ und Graphitisierung
c) AMS $^{14}$C Messung
d) Berechnung und Kalibrierung des $^{14}$C-Alters
a) Die Methoden der chemischen Vorbehandlung sind grundsätzlich beschrieben in Brock et al., 2010, Radiocarbon, 52, 102-112.

Proben von Pflanzenrückständen werden mit 1 M HCl (80° C, 20+ min), 0.025-0.2 M NaOH (80 °C) und dann mit 0.25 M HCl (80 °C, 1 h) behandelt. Nach Behandlung mit jedem Reagenz wird die Probe mit deionisiertem Wasser (Millipore) bis pH = 7 gewaschen. Für die erste HCl-Behandlung wird eine längere Zeit (20+) angewendet, wenn aus der Probe noch die Entwicklung von Gasblasen sichtbar ist. Der Schritt der NaOH-Behandlung wird einige Male wiederholt, allgemein bis keine weitere Färbung der NaOH-Lösung auftritt (die Färbung der Lösung wird von in NaOH gelösten Huminsäuren hervorgerufen), die NaOH-Behandlung wird jedoch abgebrochen, wenn die Gefahr der vollständigen Auflösung der Probe besteht.

b) Im Falle organischer Proben wird das $CO_2$ durch Verbrennung der Probe hergestellt.

Die Verbrennung der Probe wird im (unter Vakuum) verschlossenen Quarzrohr zusammen mit CuO und Ag-Wolle bei 900 °C für 10 Stunden durchgeführt. Das erhaltene Gas ($CO_2$ + Wasserdampf) wird dann in einer Vakuumapparatur getrocknet und mit Wasserstoff ($H_2$) unter Verwendung von 2 mg Fe-Pulver als Katalysator reduziert. Die erhaltene Mischung aus Kohlenstoff und Eisen wird dann in einen speziellen Aluminiumhalter entsprechend der Beschreibung von Czernik J., Goslar T., 2001, Radiocarbon, 43, 283-291 gepresst. In gleicher Weise werden die Standardproben hergestellt, z.B. Proben, die kein $^{14}$C enthalten (Kohle oder IAEA C1 Carrara Marmor) und Proben des "Internationalen modernen $^{14}$C-Standard" (Oxalsäure II).

c) Die hier beschriebenen Messungen werden im AMS $^{14}$C Labor der A. Mickiewicz University in Poznan durchgeführt.

Der Gehalt an $^{14}$C in der Kohlenstoffprobe wird mit dem Spektrometer "Compact Carbon AMS" (Hersteller: National Electrostatics Corporation, USA) gemessen, welches im Artikel Goslar T., Czernik J., Goslar E., 2004, Nuclear Instruments and Methods B, 223-224, 5-11 beschrieben ist. Die Messung beruht auf dem Vergleich der Intensitäten von Ionenstrahlen des $^{14}$C, $^{13}$C und $^{12}$C, die für jede Probe und jeden Standard (moderner Standard: "Oxalsäure II" und Standard für $^{14}$C-freien Kohlenstoff "Hintergrund") gemessen werden. In jedem AMS-Lauf werden 30 - 33 Proben unbekannten Alters im Wechsel mit 3 - 4 Messungen am modernen Standard und 1 - 2 Hintergrundmessungen gemessen. Wenn organische Proben datiert werden, wird der Hintergrund durch Kohle repräsentiert.

d) Konventionelles $^{14}$C-Alter wird berechnet unter Verwendung der Korrektur für die Isotopenfraktionierung (nach Stuiver, Polach 1977, Radiocarbon 19, 355), basierend auf dem Verhältnis $^{13}$C/$^{12}$C welches im AMS-Spektrometer simultan zum Verhältnis $^{14}$C/$^{12}$C ermittelt wird (beachte: die gemessenen Werte von $\delta^{13}$C hängen von der Isotopenfraktionierung während der $CO_2$-Reduktion und der Isotopenfraktionierung innerhalb des AMS-Spektrometers ab, und als solche können sie nicht mit den Werten $\delta^{13}$C verglichen werden, die mit konventionellen Massenspektrometern an Gasproben ermittelt werden). Die Unsicherheit des berechneten $^{14}$C-Alters wird mittels der Unsicherheit ermittelt, die sich aus der Zählstatistik ergibt, gleichfalls die Streuung (Standardabweichung) der einzelnen $^{14}$C/$^{12}$C Ergebnisse. Die Unsicherheiten der $^{14}$C/$^{12}$C-Verhältnisse, die an den Standardproben gemessen wurden, werden zusätzlich berücksichtigt. Die im Bericht angegebene 1-sigma-Unsicherheit des konventionellen $^{14}$C-Alters ist die beste Näherung der absoluten Unsicherheit der Messung.

Die Kalibrierung des $^{14}$C-Alters wird mit dem Programm OxCal ver. 4.2 (2014) durchgeführt, dessen Grundlagen in Bronk Ramsey C., 2001, Radiocarbon, 43, 355-363, beschrieben sind, während die aktuelle Version in Bronk Ramsey C., 2009, Radiocarbon, 51, 337-360 und Bronk Ramsey C. und Lee S., 2013, Radiocarbon, 55, 720-730 beschrieben ist. Die Kalibrierung wird gegen die neueste Version der $^{14}$C-Kalibrierkurve, d.h. INTCAL13 (Reimer P. J., et al. 2013, Radiocarbon, 55(4), 1869-1887) vorgenommen.

Die Analyse ergibt für archäologische Zwecke das Alter der Kohlenstoffprobe. Das Messergebnis kann jedoch auch als spezifische Aktivität angegeben werden. Im vorliegenden Fall des Materials aus Beispiel 2 ergab die Analyse für die spezifische Aktivität einen Wert von 243.30±0.52 Bq/kgC bzw. Bq/kg Kohlenstoff.

Beispiel 15 für die Herstellung von Kautschukartikeln aus SBR mit dem partikelförmigen Kohlenstoffmaterial aus Beispiel 2 in Gegenwart eines funktionelle Gruppen maskierenden Reagenz:

Das gemäß Ausführungsbeispiel 2 gewonnene Kohlenstoffmaterial wird als Füllstoff in eine Gummimischung eingebracht und unter Zuhilfenahme weiterer Additive vulkanisiert. Die Zusammensetzung der Gummimischung und deren Verarbeitung entspricht der in Beispiel 12 B (Tabelle 7) wobei jedoch das Silan Si69 äquimolar durch Triethoxymethylsilan ersetzt wird, was einem Einsatz von 1,06 phr entspricht. Auch die weitere Verarbeitung verläuft analog Beispiel 12.

Das Triethoxymethylsilan ist nicht in der Lage über Schwefelbrücken in die Vernetzung eingebaut zu werden. Es reagiert aber mit der Oberfläche des erfindungsgemäßen Kohlenstoffmaterials unter Verbrauch der funktionellen Gruppen. Die mit dem Silan reagierenden funktionellen Gruppen werden nach außen durch Methylgruppen ersetzt, was im Vergleich zum nicht modifizierten Ausgangsmaterial zu einer Kompatibilisierung der Füllstoffoberfläche mit der unpolaren Kautschukmatrix führt.

Das mit Triethoxymethylsilan behandelte erfindungsgemäße Kohlenstoffmaterial bewirkt im Gummi beispielsweise eine höhere Zugfestigkeit als das ohne Silan verwendete Kohlenstoffmaterial, erwartungsgemäß bleibt es jedoch hinter dem Kohlenstoffmaterial in Kombination mit dem koppelnden Silan Si69 zurück.

Der Spannungs-Dehnungs-Verlauf in einem Zugversuch als Beispiel für die gummitechnischen Eigenschaften der erhaltenen Kautschukartikel in Figur 4 zeigt, dass es in ausgewählten Gummisystemen und für ausgewählte Anwendungen sinnvoll sein kann, eine Maskierung der funktionellen Gruppen vorzunehmen.

Beispiele 16 A und B sowie Referenz für die Herstellung von Kautschukartikeln aus NR/BR mit dem partikelförmigen Kohlenstoffmaterial aus dem Beispiel 2 bzw. mit Ruß N660:

Das gemäß Ausführungsbeispiel 2 gewonnene Kohlenstoffmaterial wird als Füllstoff in eine Mischung aus NR und BR eingebracht und unter Zuhilfenahme weiterer Additive vulkanisiert.

Dabei wird bei A und bei der Referenz zunächst im Innenmischer (Haake Rheomix 600P, ThermoFisher Scientific, Karlsruhe) bei einer Starttemperatur von 120°C eine Mischung (Pre-Mix) aus NR und BR hergestellt, die dann mit dem jeweiligen Füllstoff und weiteren Bestandteilen versetzt wird. Im Gegensatz dazu wird bei B ebenfalls im Innenmischer (Starttemperatur 35°C, Drehzahl 60 min$^{-1}$) zuerst ein Masterbatch aus BR, dem Füllstoff und Silan hergestellt, der anschließend mit NR und den restlichen Bestandteilen weiterverarbeitet wird (ebenfalls im Innenmischer, Starttemperatur 120°C, Drehzahl 60 min$^{-1}$). Die Mengenzusammensetzung beider Verarbeitungsvarianten ist identisch.

Der Spannungs-Dehnungs-Verlauf in einem Zugversuch als Beispiel für die gummitechnischen Eigenschaften der erhaltenen Kautschukartikel aus den Beispielen A und B sind im Diagramm der Figur 5 angeführt. Diese zeigen, dass in NR/BR-Mischungen das erfindungsgemäße Kohlenstoffmaterial zur Verstärkung eingesetzt werden kann. Weiterhin wird ersichtlich, dass die Reihenfolge der Verarbeitung einen Einfluss auf die Leistung des Füllstoffs in den Artikeln aus der jeweiligen NR/BR-Kautschukmischung im vernetzten Zustand hat. Auf diese Weise kann auf Modulus und Zugfestigkeit Einfluss genommen werden.

Beispiel 17 A und B sowie Referenz zur Herstellung von Kautschukartikeln aus NBR unter Verwendung des partikelförmigen Kohlenstoffmaterials aus Beispiel 4 bzw. N 990

Das gemäß Ausführungsbeispiel 4 gewonnene Kohlenstoffmaterial wird als Füllstoff in NBR eingebracht und unter Zuhilfenahme weiterer Additive jedoch ohne Kopplungsreagenz vulkanisiert. Die Zusammensetzung der Gummimischung ist in Tabelle 9 dargestellt.

Tabelle 9

|  | Referenz | A | B |
|---|---|---|---|
| Perbunan 3945 | 100,0 | 100,0 | 100,0 |
| ZnO | 5,0 | 5,0 | 5,0 |
| Stearinsäure | 1,0 | 1,0 | 1,0 |
| Mesamoll II | 15,0 | 15,0 | 15,0 |
| Talkum | 80,0 | 80,0 | 80,0 |
| N 550 | 30,0 | 30,0 | 30,0 |
| N 990 | 80,0 | 40,0 |  |
| **Material aus Beispiel 4** |  | **40,0** | **80,0** |
| Vulkanox 4010 | 3,0 | 3,0 | 3,0 |
| Schwefel | 0,5 | 0,5 | 0,5 |
| MBTS | 1,0 | 1,0 | 1,0 |
| TMTD | 3,0 | 3,0 | 3,0 |

Die Mischungen werden auf einem Haake Rheomix 600 (tangentiale Rotorgeometrie, 78 cm$^3$) mit einer Anfangstemperatur von 40 °C und einer Rotorgeschwindigkeit von 100 min$^{-1}$ hergestellt. Es werden zunächst 2 min das NBR-Polymer, dann 2 min zusätzlich Stearinsäure, ZnO, ggf. Material aus Beispiel 4 und Talkum, weitere 4 min zusätzlich ggf. N990 und Mesamoll II, weitere 3 min Antioxidantien und weitere 2 min die Vulkanisationschemikalien gemischt. Die optimale Vulkanisationszeit wurde mittels eines *Rubber Process Analyzers* bestimmt und die Mischung bei 160°C für einen Minutenwert von ($t_{90}$ +1/mm Schichtdicke) vulkanisiert.

Die Bestimmung der Härte Shore A erfolgte nach DIN 53505: 2000-08, der Zugversuch nach DIN 53504:2009-10 und die Lagerung für 72h bei 70 °C in Öl Lubrizol OS 206304 nach DIN ISO 1817:2008-08].

Dabei wurden die in Tabelle 10 gezeigten Werte ermittelt.

Tabelle 10

| Beispiel | Referenz | A | B |
|---|---|---|---|
| Härte Shore A | 83 | 84 | 85 |
| Zugfestigkeit (MPa) | 9,9 | 11,1 | 11,4 |

(fortgesetzt)

| Beispiel | | Referenz | A | B |
|---|---|---|---|---|
| Bruchdehnung (%) | | 235 | 253 | 248 |
| Modulus (MPa) | 50 % | 4,7 | 5,3 | 5,6 |
| | 100 % | 6,6 | 7,5 | 8,0 |
| | 200 % | 9,7 | 10,8 | 11 |

Es wird deutlich, dass sowohl bei partiellem als auch bei vollständigem Ersatz des N 990 durch das erfindungsgemäße Kohlenstoffmaterial aus Beispiel 4 ohne Zugabe von Kopplungsreagenz vergleichbare oder sogar leicht verbesserte Werte im Zugversuch erreicht werden, siehe Figur 6. Gleiches gilt für die in Tabelle 11 gezeigten Veränderungen der Werte nach Lagerung in Öl. Beim Ersatz inaktiver Ruße wie N 990 ist zur Erreichung vergleichbarer Werte der Einsatz des erfindungsgemäßen Kohlenstoffmaterials in seiner Qualität nach Beispiel 4 ohne Kopplungsreagenz hinreichend.

Tabelle 11

| Änderungen nach Lagerung in Motoröl 72h/70°C | Referenz | A | B |
|---|---|---|---|
| Beim Gewicht % | -2,6 | -2,6 | -2,7 |
| Beim Volumen % | -3,4 | -3,3 | -3,3 |
| Bei der Härte | +3 | +3 | +3 |
| In der Zugfestigkeit % | +6 | +12 | +11 |
| In der Bruchdehnung % | -9 | -6 | -10 |

**Patentansprüche**

1. Partikelförmiges Kohlenstoffmaterial aus nachwachsenden Rohstoffen mit

   - einem $^{14}$C-Gehalt, der dem von nachwachsenden Rohstoffen entspricht, von größer als 0,20 Bq/g Kohlenstoff, und kleiner als 0,45 Bq/g Kohlenstoff,
   - einer STSA-Oberfläche von mindestens 5 m$^2$/g und maximal 200 m$^2$/g, und
   - einem Öl-Absorptionswert (OAN) zwischen 50 ml/100g und 150ml/100g,

   **gekennzeichnet durch**

   - einen Kohlenstoffgehalt, bezogen auf die aschefreie Trockensubstanz, zwischen 60 Ma.-% und 80 Ma.-%.

2. Partikelförmiges Kohlenstoffmaterial nach Anspruch 1, **dadurch gekennzeichnet, dass** dessen BET-Oberfläche maximal 20% von dessen STSA-Oberfläche abweicht.

3. Partikelförmiges Kohlenstoffmaterial nach Anspruch 1 oder 2, **gekennzeichnet durch** einen $^{14}$C-Gehalt, der dem von nachwachsenden Rohstoffen entspricht, größer als 0,23 Bq/g Kohlenstoff und kleiner als 0,45 Bq/g Kohlenstoff.

4. Partikelförmiges Kohlenstoffmaterial nach einem der vorhergehenden Ansprüche, **gekennzeichnet durch** einen Kohlenstoffgehalt bezogen auf die aschefreie Trockensubstanz zwischen 60 Ma.-% und 75 Ma.-%, bevorzugt zwischen 65 Ma.-% und 75 Ma.-%.

5. Partikelförmiges Kohlenstoffmaterial nach einem der vorhergehenden Ansprüche, **gekennzeichnet durch** eine STSA-Oberfläche zwischen 8 m$^2$/g und 100 m$^2$/g.

6. Partikelförmiges Kohlenstoffmaterial nach einem der vorhergehenden Ansprüche, **dadurch gekennzeichnet, dass** die BET-Oberfläche des vorliegenden partikelförmigen Kohlenstoffmaterials nur um maximal 15%, weiter bevorzugt um maximal 10% von der STSA-Oberfläche abweicht.

7. Partikelförmiges Kohlenstoffmaterial nach einem der vorhergehenden Ansprüche, **dadurch gekennzeichnet, dass** eine 15%ige Suspension des partikelförmigen Kohlenstoffmaterials in destilliertem Wasser eine elektrische Leitfähigkeit von weniger als 5 mS/cm, bevorzugt weniger als 3 mS/cm und besonders bevorzugt von weniger als 2 mS/cm aufweist.

8. Partikelförmiges Kohlenstoffmaterial nach einem der vorhergehenden Ansprüche, **dadurch gekennzeichnet, dass** eine 15%ige Suspension des partikelförmigen Kohlenstoffmaterials in destilliertem Wasser einen pH-Wert von > 6, bevorzugt > 7 aufweist.

9. Partikelförmiges Kohlenstoffmaterial nach einem der vorhergehenden Ansprüche, **gekennzeichnet durch** ein D/G-Signalverhältnis im Raman-Spektrum zwischen 0,20 und 0,90, bevorzugt zwischen 0,40 und 0,75.

10. Partikelförmiges Kohlenstoffmaterial nach einem der vorhergehenden Ansprüche, **gekennzeichnet durch** einen D90 der Q3 Verteilung der Korngröße von weniger als 30 $\mu$m, bevorzugt weniger als 20 $\mu$m.

11. Partikelförmiges Kohlenstoffmaterial nach einem der vorhergehenden Ansprüche, **dadurch gekennzeichnet, dass** der Sauerstoffgehalt des aschefreien partikelförmigen Kohlenstoffmaterials zwischen 20 Ma.-% und 30 Ma.-%, bevorzugt zwischen 20 Ma.-% und 25 Ma.-% liegt.

12. Partikelförmiges Kohlenstoffmaterial nach einem der vorhergehenden Ansprüche, **dadurch gekennzeichnet, dass** es sich bei den nachwachsenden Rohstoffen um ligninhaltige Biomasse handelt.

## Claims

1. Particulate carbon material from renewable raw materials, which has

   - a $^{14}$C content corresponding to that of renewable raw materials of greater than 0.20 Bq/g of carbon and less than 0.45 Bq/g of carbon,
   - an STSA surface area of at least 5 m$^2$/g and at most 200 m$^2$/g, and
   - an oil absorption value (OAN) between 50 ml/100 g and 150 ml/100 g,

   and which is **characterized by**

   - a carbon content, based on the ash-free dry substance, between 60 wt.-% and 80 wt.-%.

2. Particulate carbon material according to claim 1, **characterized in that** its BET surface area differs from its STSA surface area by at most 20%.

3. Particulate carbon material according to claim 1 or 2, **characterized in that** it has a $^{14}$C content corresponding to that of renewable raw materials of greater than 0.23 Bq/g of carbon and less than 0.45 Bq/g of carbon.

4. Particulate carbon material according to any of the preceding claims, **characterized in that** it has a carbon content, based on the ash-free dry substance, between 60 wt.-% and 75 wt.-%, preferably between 65 and 75 wt.-%.

5. Particulate carbon material according to any of the preceding claims, **characterized in that** it has an STSA surface area between 8 m$^2$/g and 100 m$^2$/g.

6. Particulate carbon material according to any of the preceding claims, **characterized in that** its BET surface area differs from its STSA surface area by at most 15%, preferably by at most 10%.

7. Particulate carbon material according to any of the preceding claims, **characterized in that** a 15% suspension of the particulate carbon material in distilled water has an electrical conductivity of less than 5 mS/cm, preferably less than 3 mS/cm, and particularly preferably less than 2 mS/cm.

8. The particulate carbon material according to any of the preceding claims, **characterized in that** a 15% suspension of the particulate carbon material in distilled water has a pH value of > 6, preferably > 7.

9. Particulate carbon material according to any of the preceding claims, **characterized by** a D/G signal ratio in the Raman spectrum between 0.20 and 0.90, preferably between 0.40 and 0.75.

10. Particulate carbon material according to any of the preceding claims, **characterized by** a D90 of the Q3 distribution of the grain size of less than 30 $\mu$m, preferably less than 20 $\mu$m.

11. Particulate carbon material according to any of the preceding claims, **characterized in that** the oxygen content of the ash-free particulate carbon material is between 20 wt.-% and 30 wt.-%, preferably between 20 wt.-% and 25 wt.-%.

12. Particulate carbon material according to any of the preceding claims, **characterized in that** the renewable raw materials are lignin-containing biomass.

**Revendications**

1. Matériau de carbone sous forme de particules provenant des matières premières renouvelables, avec

   une teneur en $^{14}$C correspondant à celle des matières premières renouvelable et étant supérieure à 0,20 Bq/g de carbone et inférieure à 0,45 Bq/g de carbone,

   - une surface STSA d'au moins 5 m[2]/g et d'au maximum 200 m[2]/g, et
   - une valeur de l'indice d'absorption d'huile (OAN) d'au moins 50 ml/100 g et d'au maximum 150 ml/100 g,

   **caractérisé par**
   une teneur en carbone entre 60 % en masse et 80 % en masse par rapport à la matière sèche exempte de cendres.

2. Matériau de carbone sous forme de particules selon la revendication 1, **caractérisé en ce que** sa surface BET diffère au maximum de 20 % de sa surface STSA.

3. Matériau de carbone sous forme de particules selon la revendication 1 ou 2, **caractérisé par** une teneur en $^{14}$C correspondant à celle des matières premières renouvelables et étant supérieure à 0,23 Bq/g de carbone et inférieure à 0,45 Bq/g de carbone.

4. Matériau de carbone sous forme de particules selon l'une quelconque des revendications précédentes, **caractérisé par** une teneur en carbone entre 60 % en masse et 75 % en masse, de préférence entre 65 % en masse et 75 % en masse, respectivement par rapport à la matière sèche exempte de cendres.

5. Matériau de carbone sous forme de particules selon l'une quelconque des revendications précédentes, **caractérisé par** une surface STSA entre 8 m[2]/g et 100 m[2]/g.

6. Matériau de carbone sous forme de particules selon l'une quelconque des revendications précédentes, **caractérisé en ce que** la surface BET du présent matériau de carbone sous forme de particules diffère au maximum de 15 %, en outre préférablement au maximum de 10 %, de sa surface STSA.

7. Matériau de carbone sous forme de particules selon l'une quelconque des revendications précédentes, **caractérisé en ce qu'**une suspension à 15 % du matériau de carbone sous forme de particules dans de l'eau distillée présente une conductivité électrique inférieure à 5 mS/cm, de préférence inférieure à 3 mS/cm, et de manière particulièrement préférée inférieure à 2 mS/cm.

8. Matériau de carbone sous forme de particules selon l'une quelconque des revendications précédentes, **caractérisé en ce qu'**une suspension à 15 % du matériau de carbone sous forme de particules dans de l'eau distillée présente une valeur pH de > 6, de préférence > 7.

9. Matériau de carbone sous forme de particules selon l'une quelconque des revendications précédentes, **caractérisé par** un rapport de signal D/G dans le spectre Raman compris entre 0,20 et 0,90, de préférence entre 0,40 et 0,75.

10. Matériau de carbone sous forme de particules selon l'une quelconque des revendications précédentes, **caractérisé par** une valeur D90 de la distribution granulométrique Q3 inférieure de 30 $\mu$m, de préférence inférieure de 20 $\mu$m.

**11.** Matériau de carbone sous forme de particules selon l'une quelconque des revendications précédentes, **caractérisé en ce que** la teneur en oxygène du matériau de carbone sous forme de particules exempte de cendres est entre 20 % en masse et 30 % en masse, de préférence entre 20 % en masse et 25 % en masse.

**12.** Matériau de carbone sous forme de particules selon l'une quelconque des revendications précédentes, **caractérisé en ce que** les matières premières renouvelables sont une biomasse contenant de la lignine.

**FIGUR 1**

**FIGUR 2**

FIGUR 3

FIGUR 4

**FIGUR 5**

Dehnung [%]

Spannung [MPa]

Referenz N660, Pre-Mix

Beispiel 16 A, Pre-Mix

Beispiel 16 B, BR-Masterbatch + NR

**FIGUR 6**

EP 3 377 585 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005100502 A1
- WO 2010043562 A1
- WO 2014096544 A1
- DE 102008050966 A1
- EP 2223928 A1
- WO 2014122163 A1
- WO 2015018944 A1
- WO 2010043562 A

**In der Beschreibung aufgeführte Nicht-Patentliteratur**

- **FRITZ RÖTHEMEIER ; FRANZ SOMMER.** Kautschuktechnologie. Carl Hanser Verlag, 2013
- **FRITZ RÖTHEMEIER ; FRANZ SOMMER.** Oberflächenchemie des Polymers angepasst. Carl Hanser Verlag, 2013, 301-302
- **FRITZ RÖTHEMEIER ; FRANZ SOMMER.** Vergleiche dazu. Carl Hanser Verlag, 2013, 301-302
- **SIEHE FRITZ RÖTHEMEIER ; FRANZ SOMMER.** Kautschuktechnologie. Carl Hanser Verlag, 2013, 112-113
- **W. HOFMANN.** Kautschuktechnologie. Genter Verlag, 1980
- Poznan Radiocarbon Laboratory. Foundation of the A. Mickiewicz University, vol. 46, 61-612
- **BROCK et al.** *Radiocarbon,* 2010, vol. 52, 102-112
- **CZERNIK J. ; GOSLAR T.** *Radiocarbon,* 2001, vol. 43, 283-291
- **GOSLAR T. ; CZERNIK J. ; GOSLAR E.** *Nuclear Instruments and Methods B,* 2004, vol. 223-224, 5-11
- **STUIVER ; POLACH.** *Radiocarbon,* 1977, vol. 19, 355
- **BRONK RAMSEY C.** *Radiocarbon,* 2001, vol. 43, 355-363
- **BRONK RAMSEY C.** *Radiocarbon,* 2009, vol. 51, 337-360
- **BRONK RAMSEY C. ; LEE S.** *Radiocarbon,* 2013, vol. 55, 720-730
- **REIMER P. J. et al.** *Radiocarbon,* 2013, vol. 55 (4), 1869-1887